# EUROPEAN PATENT APPLICATION

(11) **EP 3 678 017 A1**
(43) Date of publication of application: **08.07.2020**
(21) Application number: 20159430.6
(22) Date of filing: 30.04.2015
(51) Int. Cl.: G06F 3/14

(54) **METHOD AND APPARATUS FOR OUTPUTTING CONTENTS USING A PLURALITY OF DISPLAYS**

(30) Priority: 02.05.2014 KR 20140053499
(62) Divisional of application: 15786230.1
(71) Applicant: Samsung Electronics Co., Ltd., Gyeonggi-do 16677 (KR)
(72) Inventor: KIM, Seong Eun, 16677 Suwon-si, (KR); KIM, Ju Nyun, 16677 Suwon-si, (KR); BAE, Myung Hun, 16677 Suwon-si, (KR); HONG, Hyun Ju, 16677 Suwon-si, (KR); CHA, Do Hun, 16677 Suwon-si, (KR); PARK, Jung Sik, 16677 Suwon-si, (KR); SONG, Se Jun, 16677 Suwon-si, (KR); SHIN, Heung Sik, 16677 Suwon-si, (KR); HONG, Myung Gon, 16677 Suwon-si, (KR)
(74) Representative: HGF

(57) **Abstract**

An electronic device is provided. The electronic device includes a plurality of displays, at least one processor configured to select a first display including at least one of the plurality of displays, based on relative positions of the plurality of displays, user information, an application to be executed, or a component associated with a function of the application, and a display control module configured to output contents to the first display and at least one object associated with the contents to at least one other second display of the plurality of displays.

## Description

### Technical Field

This application claims priority to a Korean Patent Application filed on May 2, 2014 in the Korean Intellectual Property Office and assigned Serial No. 10-2014-0053499, the entire contents of which are incorporated herein by reference.

The present invention relates generally to a method of efficiently outputting contents and an object associated with the contents to a plurality of displays based on the use environment of various electronic devices in an electronic device including a plurality of displays, and more particularly, to a method of outputting contents on one or more of a plurality of displays and outputting menus or information associated with any other display(s).

### Background Art

In general, an electronic device such as a smart phone, a tablet, Personal Computer (PC) etc., includes one display. However, conventional terminals such as a Personal Communications Services (PCS) phone, a Personal Digital Assistant (PDA), etc. may include a dual display, that is, two displays.

When an electronic device includes two or more displays, battery power is quickly consumed, or a thickness of the electronic device becomes thicker to accommodate a larger battery. However, such problems are being gradually solved by increasing the capacity of a battery and making a display panel thin.

### Disclosure of Invention

### Technical Problem

An increase in the number of displays that the electronic device includes allows an electronic device to output data efficiently using an added display(s). However, a method for implementing such a technique has not been developed. In a desktop Personal Computer (PC) using a conventional dual monitor, the size of a monitor becomes larger without adding effects. For example, if a window is placed at a boundary area of monitors, then a portion of the window is cut off due to a boundary structure, such as a bezel, when the window is displayed. Thus, an output method that is applied to the conventional dual monitor is unsuitable for an output method of an electronic device that includes a plurality of displays.

### Solution to Problem

The present invention has been made to address the above-mentioned problems and disadvantages, and to provide at least the advantages described below. Accordingly, an aspect of the present invention provides an efficient view and working environment by outputting contents on one or more of a plurality of displays and outputting menus or information associated with any other display(s).

In accordance with an aspect of the present invention, an electronic device is provided. The electronic device includes a plurality of displays, at least one processor configured to select a first display including at least one of the plurality of displays, based on relative positions of the plurality of displays, user information, an application to be executed, or a component associated with a function of the application, and a display control module configured to output contents to the first display and at least one object associated with the contents to at least one other second display of the plurality of displays.

In accordance with another aspect of the present invention, a method of an electronic device which includes a first display and a second display is provided. The method includes selecting one of the first display or the second display, based on relative positions of the first display and the second display, user information, an application to be executed, or a component associated with a function of the application, and outputting contents to the selected first display or second display and at least one object associated with the contents to an unselected display.

In accordance with another aspect of the present invention, a non-transitory computer-readable storage medium storing a computer-readable instruction, the instruction allowing an electronic device to perform a method. The method includes selecting one of a first display or a second display, based on relative positions of the first display and the second display, user information, an application to be executed, or a component associated with a function of the application, and outputting contents to the selected first display or second display and at least one object associated with the contents to an unselected display.

### Brief Description of Drawings

The foregoing and other aspects, features, and advantages of the present invention will be more apparent from the following description, taken in conjunction with the accompanying drawings, in which:
FIG. 1A is a diagram of a structure of an electronic device including two displays, according to an embodiment of the prevent invention;
FIG. 1B is a diagram of a folded state of an electronic device shown in FIG. 1A(A), according to an embodiment of the prevent invention;
FIG. 1C is a diagram of a configuration of an electronic device including a magnet, according to an embodiment of the prevent invention;
FIG. 1D is a diagram of a shape in which an electronic device shown in FIG. 1A(A) is folded in another direction, according to an embodiment of the prevent invention;
FIG. 2A is a diagram of original text and translation screens, according to an embodiment of the prevent invention;
FIG. 2B is a diagram of contents and object screens expressed based on user information, according to an embodiment of the prevent invention;
FIG. 2C are diagrams of a display selection User Interface (UI), according to an embodiment of the prevent invention;
FIG. 2D is a diagram of contents and object screens expressed based on a grip state of an electronic device or a user's habit of using an electronic device, according to an embodiment of the prevent invention;
FIG. 2E is a diagram in which a display for outputting contents is determined based on a disposition or arrangement of hardware components of an electronic device, according to an embodiment of the prevent invention;
FIG. 2F is a diagram in which a display for outputting contents is determined based on a display state or performance, according to an embodiment of the prevent invention;
FIG. 2G is a diagram in which contents and objects are output to displays, according to an embodiment of the prevent invention;
FIG. 2H is a diagram of an input based on a folded state of a display, according to an embodiment of the prevent invention;
FIG. 3A is a diagram of a structure of an electronic device including three displays, according to an embodiment of the prevent invention;
FIG. 3B is a diagram of a folded state of an electronic device shown in FIG. 3A, according to an embodiment of the prevent invention;
FIG. 3C is a diagram of a structure and a folded shape of an electronic device including two displays and an additional cover, according to an embodiment of the prevent invention;
FIG. 4A is a diagram of a connection structure between plural displays, according to an embodiment of the prevent invention;
FIG. 4B is a diagram of a connection structure between plural displays, according to an embodiment of the prevent invention;
FIG. 5A is a diagram where plural displays are connected, according to an embodiment of the prevent invention;
FIG. 5B is a diagram where plural displays are connected, according to an embodiment of the prevent invention;
FIG. 6 is a block diagram of a communication environment of an electronic device, according to an embodiment of the prevent invention;
FIG. 7A is a block diagram of a display control method, according to an embodiment of the prevent invention;
FIG. 7B is a block diagram of a display control method, according to an embodiment of the prevent invention;
FIG. 8 is a block diagram of an electronic device, according to an embodiment of the prevent invention;
FIG. 9 is a diagram of a communication protocol between electronic devices, according to an embodiment of the prevent invention;
FIG. 10 is a flowchart of a method of outputting contents and objects using a plurality of displays, according to an embodiment of the prevent invention;
FIG. 11 is a diagram of contents and objects output using a camera module, according to an embodiment of the prevent invention;
FIG. 12 is a diagram of interaction between contents and objects, according to an embodiment of the prevent invention;
FIG. 13 is a diagram of contents and objects output using an OCR application, according to an embodiment of the prevent invention;
FIG. 14 is a diagram of contents and object screens according to an embodiment of the prevent invention; and
FIG. 15 is a diagram of contents and object screens according to an embodiment of the prevent invention.

### Mode for the Invention

Hereinafter, the present invention is described with reference to the accompanying drawings. Various modifications are possible in various embodiments of the present invention and embodiments of the present invention are illustrated in the accompanying drawings and related detailed descriptions are provided below. Thus, it is intended that the present invention include modifications and variations of the present invention that are within the scope of the appended claims and their equivalents. With respect to the descriptions of the drawings, like reference numerals refer to like elements.

The terms "include," "comprise," "have", "may include," "may comprise," and "may have" used herein indicate disclosed functions, operations, or the existence of elements, but does not exclude other functions, operations or elements. Additionally, in the present disclosure, the terms "include," "comprise," "including," or "comprising," indicates a property, a region, a fixed number, a step, a process, an element and/or a component, but does not exclude other properties, regions, fixed numbers, steps, processes, elements and/or components.

The term "or" used herein includes any or all combinations of the words connected by the term "or." For example, the expression "A or B" may include A, B, or both A and B. As used herein, the term "and/or" includes any and all combinations of one or more of the associated listed items.

The terms such as "1st," "2nd," "first," "second," and the like used herein may refer to modifying various different elements of various embodiments, but do not limit the elements. For instance, such terms do not limit the order and/or priority of the elements. Furthermore, such terms may be used to distinguish one element from another element. For example, both "a first user device" and "a second user device" indicate a user device, but indicate different user devices. For example, a first component may be referred to as a second component and vice versa without departing from the scope of the present invention.

In the description below, when one part (or element, device, etc.) is referred to as being "connected" to another part (or element, device, etc.), it should be understood that the former can be "directly connected" to the latter, or "electrically connected" to the latter via an intervening part (or element, device, etc.). It will be further understood that when one component is referred to as being "directly connected" or "directly linked" to another component, it indicates that no intervening component is present.

Terms used in the present disclosure are used to describe embodiments of the present invention and are not intended to limit the scope of the present invention. The terms of a singular form may include plural forms unless otherwise specified.

Unless otherwise defined herein, all of the terms used herein, which include technical or scientific terms, may have the same meaning that is generally understood by a person skilled in the art. It will be further understood that terms, which are defined in a dictionary and commonly used, should also be interpreted as is customary in the relevant related art, and should not be interpreted in an idealized or overly formal sense unless expressly so defined herein in various embodiments of the present invention.

An electronic device according to various embodiments of the present invention may have a communication function. For example, electronic devices may include at least one of smartphones, tablet Personal Computers (PCs), mobile phones, video phones, electronic book (e-book) readers, desktop PCs, laptop PCs, netbook computers, Personal Digital Assistants (PDAs), Portable Multimedia Players (PMPs), Moving Picture Experts Group Audio Layer 3 (MP3) players, mobile medical devices, cameras, and wearable devices (e.g., Head-Mounted-Devices (HMDs) such as electronic glasses, electronic apparel, electronic bracelets, electronic necklaces, electronic accessories, electronic tattoos, and smart watches).

According to various embodiments of the present invention, an electronic device may be smart home appliances having a communication function. The smart home appliances may include at least one of, for example, televisions, Digital Video Disk (DVD) players, audio devices, refrigerators, air conditioners, cleaners, ovens, microwave ovens, washing machines, air cleaners, set-top boxes, TV boxes (e.g., Samsung HomeSync™, Apple TV™ or Google TV™), game consoles, electronic dictionaries, electronic keys, camcorders, and electronic picture frames.

According to embodiments of the present invention, an electronic device may include at least one of various medical devices (for example, Magnetic Resonance Angiography (MRA) devices, Magnetic Resonance Imaging (MRI) devices, Computed Tomography (CT) devices, medical imaging devices, ultrasonic devices, etc.), navigation devices, Global Positioning System (GPS) receivers, Event Data Recorders (EDRs), Flight Data Recorders (FDRs), vehicle infotainment devices, marine electronic equipment (for example, marine navigation systems, gyro compasses, etc.), avionics, security equipment, car head units, industrial or household robots, financial institutions' Automated Teller Machines (ATMs), and stores' Point Of Sale (POS) systems.

According to an embodiment of the present invention, an electronic device may include at least one of furniture or buildings/structures having a communication function, electronic boards, electronic signature receiving devices, projectors, or various measuring instruments (for example, water, electricity, gas, or radio signal measuring instruments). An electronic device according to an embodiment of the present invention may be one of the above-mentioned various devices or a combination thereof. Additionally, an electronic device according to an embodiment of the present invention may be a flexible device. Furthermore, it is apparent to those skilled in the art that an electronic device according to an embodiment of the present invention is not limited to the above-mentioned devices.

Hereinafter, an electronic device according to various embodiments of the present invention is described in more detail with reference to the accompanying drawings. The term "user" in various embodiments may refer to a person using an electronic device or a device using an electronic device (for example, an artificial intelligence electronic device).

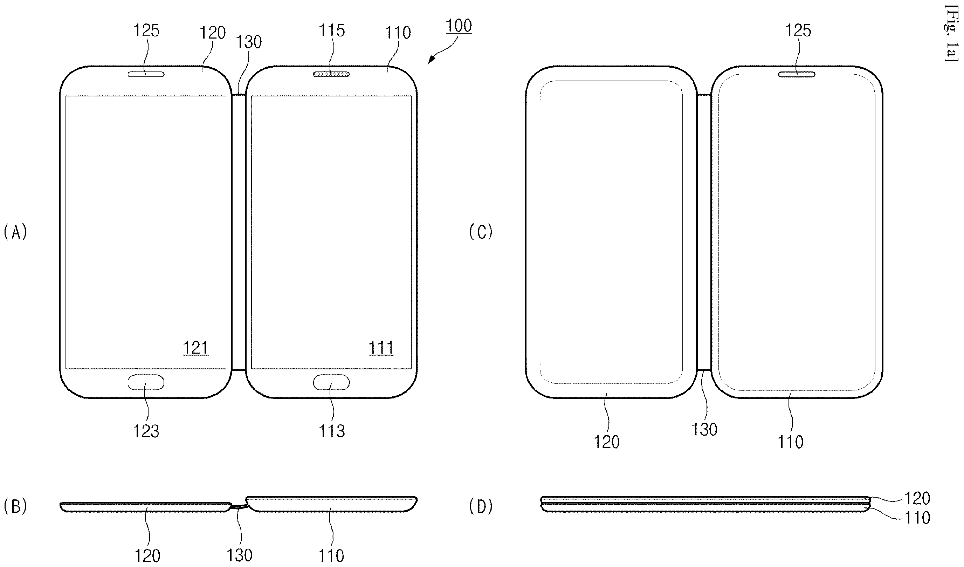

FIG. 1A(A) to 1A(D) are diagrams showing a structure of an electronic device including two displays, according to an embodiment of the present invention.

Referring to FIG. 1A(A), an electronic device 100 includes a main body 110, a sub body 120, and a connection portion 130 to connect the main body 110 and the sub body 120. The main body 110 may include a display 111. The main body 110 may include at least one of a home key 113 or a microphone 115. Besides, the main body 110 may further include a speaker, a volume button, a sleep button, a front camera, and an illumination sensor.

The sub body 120 may include a display 121. The sub body 120 may have openings 123 and 125 that are formed to not cover the home key 113 and the microphone 115 (or components of the main body 110 including a front camera module).

In various embodiments of the present invention, the electronic device 100 may allow different contents to be output to the display 111 (e.g., a first display) and the display 121 (e.g., a second display).

Referring to FIG. 1A(B), a thickness of the main body 110 of the electronic device 100 may be different from that of the sub body 120 thereof. For example, the main body 110 may internally include a control module (e.g., an Application Processor (AP)), a memory, an antenna, and a stylus or S-pen. The sub body 120 may include minimum components for operating the display 121 or a display panel of the display 121. In this case, a thickness of the main body 110 may be thicker than that of the sub body 120. In various embodiments of the present invention, however, thicknesses of the main body 110 and the sub body 120 may be variously adjusted by disposing components of the main body 110 and the sub body 120 appropriately.

Referring to FIG. 1A(C), the back side of the electronic device 100 is illustrated. As illustrated, the main body 110 is placed at a left side, and the sub body 120 having the opening 125 is placed at a right side.

Referring to FIG. 1A(D), the electronic device 100 may be folded such that at least two surfaces (e.g., surfaces where the displays 111 and 121 are placed) touch each other. The connection portion 130 may be implemented with a material (e.g. leather) such that the electronic device 100 can be folded. However, the material of the connection portion 130 is not be limited thereto. For example, a rotatable connection structure, a joining structure, a metal or plastic, a synthetic resin, and a memory shape material may be used as the material of the connection portion 130. The connection portion 130 may internally include circuitry for expressing contents on the displays 111 and 121, interconnections, and a flexible Printed Circuit Board (FPCB).

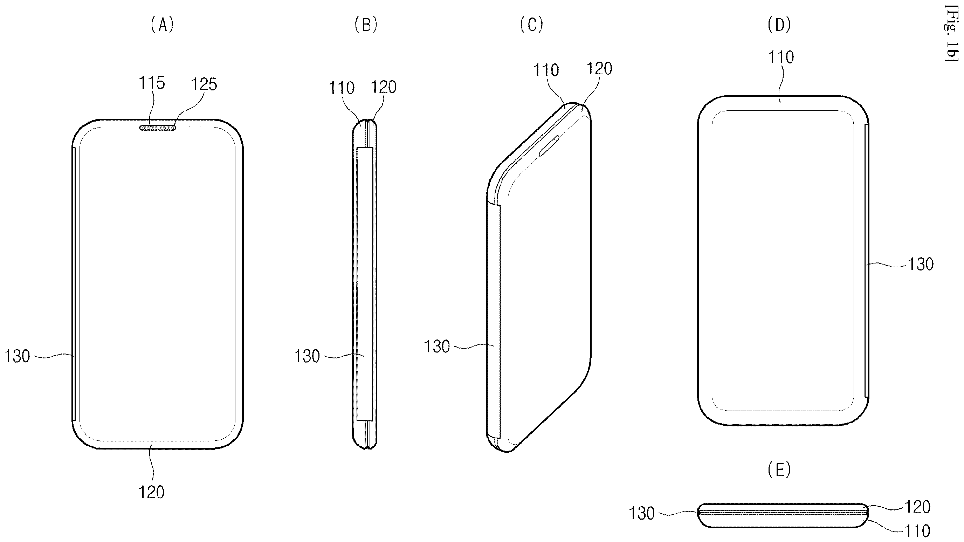

FIGs. 1B(A) to 1B(E) are diagrams of a folded state of an electronic device shown in FIG. 1A(A), according to an embodiment of the present invention.

Referring to FIG. 1B(A), a shape in which a sub body 120 covers a main body 110 is illustrated. An opening 125 does not cover a microphone 115 (or a front camera) that the main body 110 includes. In various embodiments of the present invention, the electronic device 100 interrupts an output of a display when a value of illumination sensed by two illumination sensors respectively included in the main body 110 and the sub body 120 is below a reference value. FIGs. 1B(B) to 1B(E) show a shape of the folded electronic device 100 (refer to FIG. 1B(A)) seen from a side (e.g. a direction of a connection portion 130), a perspective view of the folded electronic device 100, a back side of the folded electronic device 100, and a shape of the folded electronic device 100 seen from a bottom, respectively.

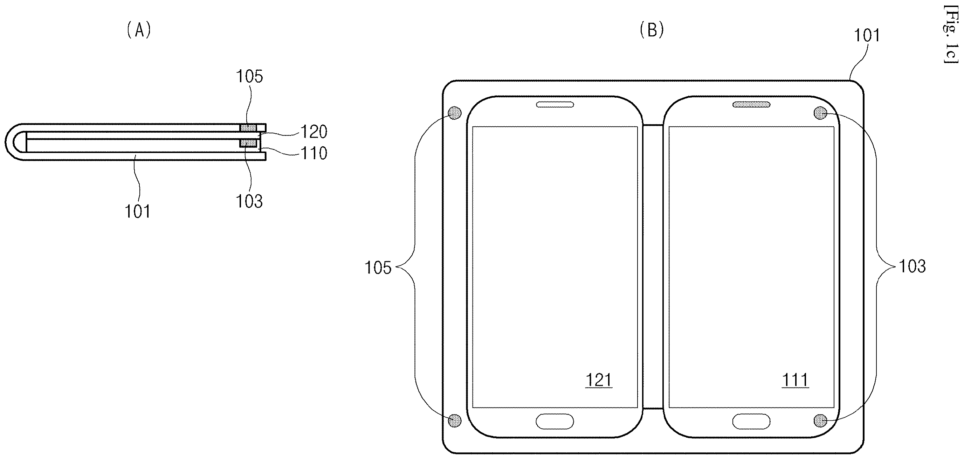

In various embodiments of the present invention, the electronic device 100 senses a location of a magnet (or, a magnetic sensor) that the sub body 120 includes. When the sensing result indicates that screens of the electronic device 100 face each other (e.g., the displays 111 and 121 face each other), the electronic device 100 interrupts an output of a display (e.g., the display 111 and/or the display 121) (or may turn the display off). In various embodiments of the present invention, the electronic device 100 may include a magnet that is placed at its cover, and may include a magnet or a metal material that is placed on at least one of the main body 110 or the sub body 120. The electronic device 100 controls an output of a display using the magnet that the electronic device 100 includes. The same principle may be applied to the cases where at least one body includes a magnet and where a cover includes a metal or magnet. This is more fully described below with reference to FIGs. 1C(A) and 1C(B).

FIGs. 1C(A) and 1C(B) are diagrams of an electronic device including a magnet, according to an embodiment of the present invention. FIG. 1C(A) shows a folded state of an electronic device 100, and FIG. 1C(B) shows an unfolded (or open) state of the electronic device 100. For ease of description, in FIGs. 1C(A) and 1C(B), components that are identical to those in FIGs. 1A(A) and 1B(A) may be marked by the same reference numerals, and a description thereof may be omitted.

Referring to FIGs. 1C(A) and 1C(B), an electronic device 100 includes a cover 101 that is attached (or connected) to a main body 110 and a sub body 120. The main body 110 includes magnets 103, and the cover 101 includes magnets 105. In the event that the electronic device 100 remains in a folded state, a magnet (e.g., a magnet 103) senses the strength or variation of a magnetic field of another magnet, and a close or open state (or a folded or unfolded state) of the electronic device 100 may be determined according to the sensing result. In various embodiments of the present invention, the magnets 103 may be placed at the sub body 120. In this case, locations of the magnets 105 included in the cover 101 may be changed. Also, in various embodiments of the present invention, the magnets 103 included in the main body 110 or the sub body 120 may be replaced with magnetic sensors or may be interpreted as magnetic sensors.

In various embodiments of the present invention, a magnet(s) may be placed at one of a cover and a body, and a metal material may be placed at the other entity. In this case, the electronic device 100 may detect an induced current that occurs at the metal material according to a variation in a magnetic field and may determine a close or open state of the electronic device 100 based on the detection result. In various embodiments of the present invention, to improve accuracy of the determination, the electronic device 100 may determine a close or open state of the electronic device 100 using a variation sensed by another sensor (e.g., an illumination sensor) together with the result of detecting an induced current.

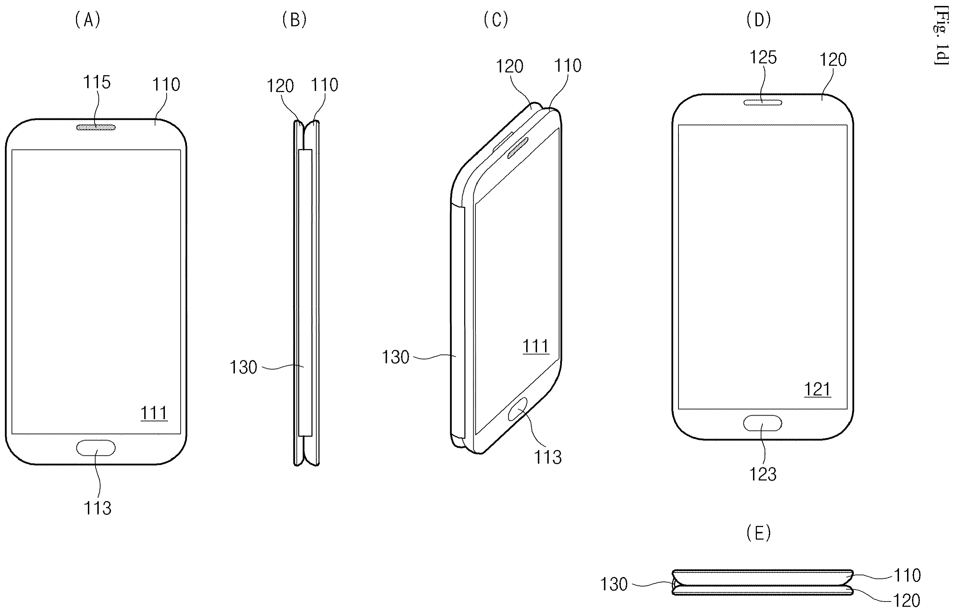

FIGs. 1D(A) to 1D(E) are diagrams of a shape in which an electronic device shown in FIGs. 1A(A) to 1A(D) is folded in another direction, according to an embodiment of the present invention.

Unlike a folded shape shown in FIGs. 1B(A) to 1(B)(E), an electronic device 100 shown in FIGs. 1D(A) to 1D(E) may be folded such that back sides of main body 110 and sub body 120 face each other (e.g., such that displays 111 and 121 face in opposite directions). In the event that a folded state of the electronic device 100 corresponds to one of FIGs. 1D(A) to 1D(E), one display (e.g., a display 111) may appear within a user's view. In various embodiments, the electronic device 100 may sense locations or dispositions of a plurality of displays (e.g., a display 111 and a display 121). Based on the sensing result, the electronic device 100 may output data to a display (e.g., a display 111) that is determined as appearing within the user's view and may interrupt an output to a display (e.g., a display 121) that is determined as not appearing within the user's view.

For example, as illustrated in FIGs. 1D(A) to 1D(E), the electronic device 100 may sense a variation in a magnetic field due to a change of a position of a magnet, which is included in at least one of the main body 110 or the sub body 120, using a magnetic sensor. Based on the sensed variation in the magnetic field, the electronic device 100 may determine whether the electronic device 100 remains in a folded state or in an unfolded state or whether the electronic device 100 is folded by a predetermined angle (e.g., 60 degrees) (e.g., displays 111 and 112 of the electronic device 100 form an angle of 60 degrees or more). Also, the electronic device 100 may sense an illumination state through an illumination sensor. When the electronic device 100 is folded and a value of illumination of the main body 110 or the sub body 120 is over a reference value, the electronic device 100 may be determined as being folded as illustrated in FIGs. 1D(A) to 1D(E). In various embodiments of the present invention, when illumination of one side of the electronic device 100 (e.g., one side of the display 121) corresponds to a very dark state, the electronic device 100 may determine the display 121 as being folded toward a ground and the display 111 as appearing within the user's view. In this case, an output on the display 121 may be interrupted.

In various embodiments of the present invention, a folded state or a disposition state of the electronic device 100 may be determined using a combination of sensors besides the magnetic sensor or the illumination sensor, including an inertial sensor, a gyro sensor, a gravity sensor, a Hall effect sensor, and a low frequency passive sensor. The electronic device 100 may determine whether to output contents or objects to any display, based on its disposition state.

FIGs. 1D(A) to 1D(E) show a shape of the folded electronic device 100 (refer to FIG. 1D(A)) seen from a side (a direction of a connection portion 130), a perspective view of the folded electronic device 100, a back side of the folded electronic device 100, and a shape of the folded electronic device 100 seen from a bottom, respectively.

In various embodiments of the present invention, an electronic device (e.g., an electronic device 100) may display contents on some display and objects associated with the contents on another display. In the present disclosure, contents may refer to a data source, original data, or raw data that is an output target. Also, the object may include a variety of control or edit menus for controlling contents, controlling an application to output the contents, or editing the contents. Also, the object may include a text, an image, a web page, and a moving picture, which are associated with contents. Also, the object may be an expression (or, a display item) of a security content associated with contents, based on the contents. In various embodiments of the present invention, the object may include all items excluding the contents.

For example, in the case of a camera application, an image taken by a camera module may correspond to the content, and menus for changing a shooting mode (e.g., a still or video mode) and a shooting environment (e.g., flash ON/OFF, multi-focusing, face recognition, white balance, etc.) may correspond to the objects.

For example, in the case of an Internet application, a web page corresponding to a designated link may correspond to the content, and an application control menu, such as a "BACK" or "HOME" button, may correspond to the object. When one of plural items, such as a certain image, a text, a moving picture, and a link associated with a web page, is selected, information corresponding to the selected item may correspond to the object.

For example, in the case of an image edit application, an original image may correspond to the content, and an edit menu, a control menu, and an edited image may correspond to the objects. For example, in the case of a web page or e-book, an original text may correspond to the contents, and an item that is output by an electronic dictionary application for translating the original text into a selected language and displaying the translated result or for checking vocabularies included in the original text may correspond to the object.

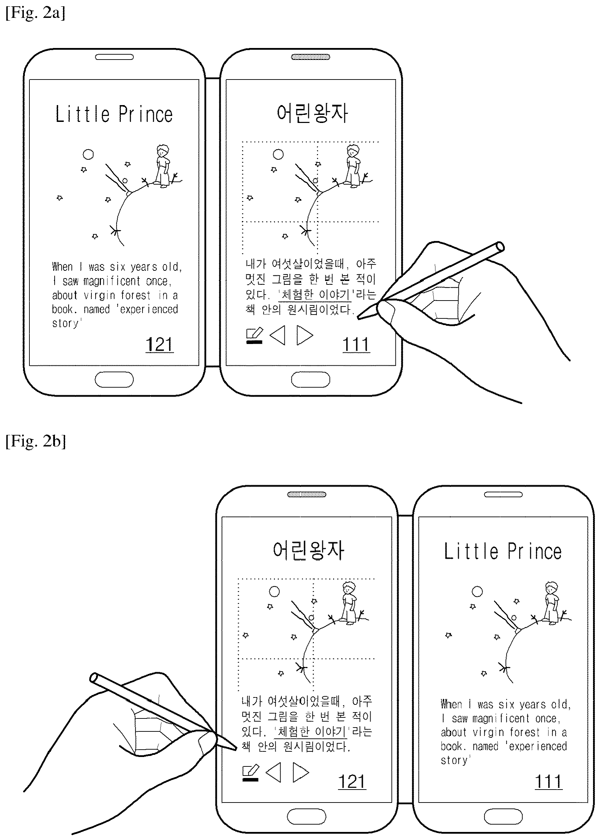

FIG. 2A is a diagram of original text and translation screens according to an embodiment of the present invention.

In various embodiments of the present invention, an electronic device 100 may determine a display for expressing contents and a display for expressing an object, based on relative positions of displays. For example, the electronic device 100 may designate a left display 121 as a display for outputting contents. In this case, the contents may be output to the display 121, and an object may be output to a right display 111. In FIG. 2A, an original text (e.g. English) of an e-book may be output to the display 121, and objects such as a translation (e.g. the Korean language) of the original text and control icons (e.g., a next page, a previous page, and a memo) may be output to the display 111.

FIG. 2B is a diagram of contents and object screens outputted based on user information, according to an embodiment of the present invention. For example, when a user is left-handed, an electronic device 100 may output contents to a display 111 that is placed at the right. In this case, the electronic device 100 may display an object on the display 121 placed at the left (e.g. a menu for controlling or editing the contents). By this display method the electronic device 100 may improve user convenience.

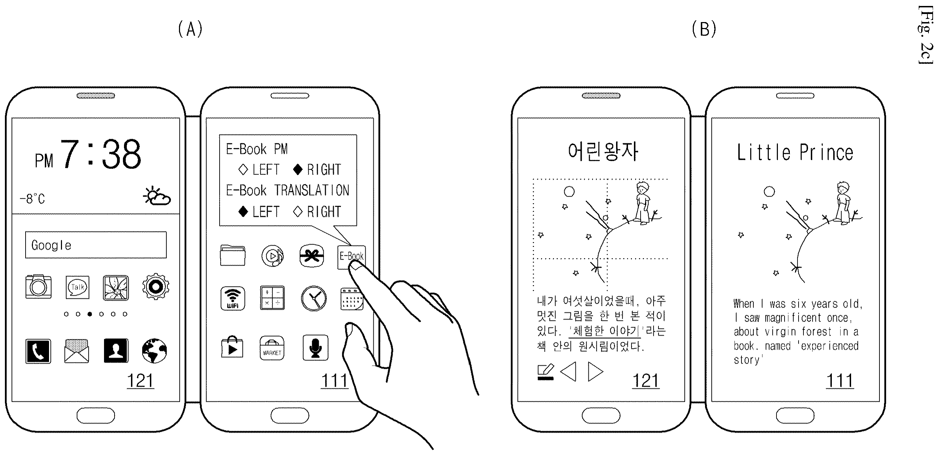

FIGs. 2C(A) and 2C(B) are diagrams of a display selection User Interface (UI), according to an embodiment of the present invention.

In various embodiments of the present invention, an electronic device 100 may determine a display for outputting contents, based on a designated reference. For example, the electronic device 100 may decide to output contents to a display, selected by a user input, from among a plurality of displays. In this case, as illustrated in FIGs. 2C(A) and 2C(B), a selection User Interface (UI) may be provided on at least one display (e.g., a display 111). Also, in various embodiments of the present invention, if a certain application supports a contents-object division output according to one of embodiments of the present invention, a screen decision UI may be provided in response to an event such as the selecting (or, executing) of an application. When a user selects a right display (e.g., a display 111) as a display for outputting an original text (e.g. English) and a left display (e.g., 121) as a display for outputting a translation (e.g. in the Korean Language), screens may be displayed as illustrated in FIG. 2C(B) (opposite to screens shown in FIG. 2A(A)).

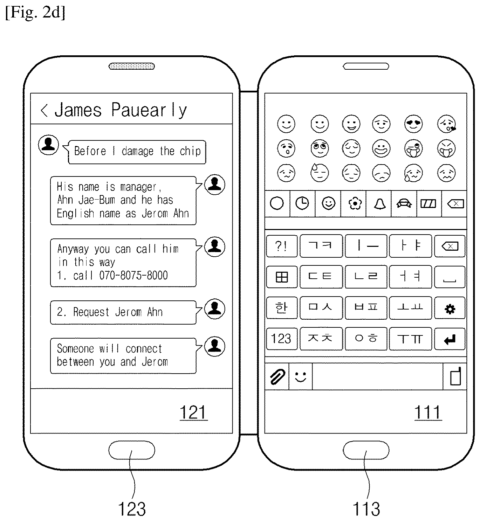

FIG. 2D is a diagram of contents and object screens expressed based on a grip state of an electronic device or a user's habit of using an electronic device, according to an embodiment of the present invention.

FIG. 2D, if a user grips an electronic device 100 with the left hand, the electronic device 100 may determine a left display 121 as a display for outputting contents. In this case, the contents may be output to the display 121, and objects may be output to a right display 111. For example, a chatting application may be output to the left display 121, and an input screen including an input interface such as a keypad may be output to the right display 121. In this embodiment of the present invention, a user may view many contents (chatting screen) at a time and may conveniently interact with objects (e.g., a keypad and an emoticon or keypads such as Korean characters and the English alphabet, or the English alphabet and numbers are independently displayed on one screen).

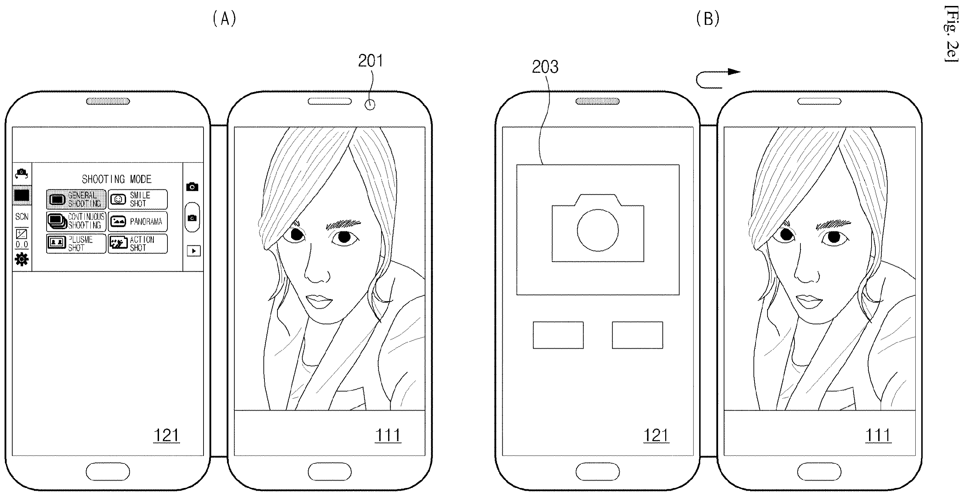

FIGs. 2E(A) and 2E(B) are diagrams in which a display for outputting contents is determined based on a disposition or arrangement of hardware components of an electronic device, according to an embodiment of the present invention.

For example, referring to FIG. 2(A), if an electronic device 100 includes a camera module 201, the electronic device 100 (or, a control module included in the electronic device 100) may determine a display for outputting contents, based on relative positions of the camera module 201 and displays. For example, when a running camera module 201 and a display 111 are placed in a main body 110, the control module may decide to output contents to the display 111. In this case, contents may be an image taken by the camera module 201. Also, at least one object may include a menu for controlling the camera module 201. For example, when a user takes a picture using a camera function, an image of a subject (e.g. a user) may be output to the display 111 according to a position of the camera module 201, and a control menu for controlling the functioning of the camera module 201 may be output to a display 121. In an embodiment of the present invention, for example, if a camera module is mounted on a location corresponding to the display 121(e.g., a sub body 120), contents may be output to the display 121, and an object(s) may be output to the display 111.

In various embodiments of the present invention, the electronic device 100 may select at least one display, which will output contents, from among a plurality of displays, based on a component (e.g., a camera lens) associated with a function of an application (e.g., a camera application). The component may be at least one of, besides the camera lens (or, a camera module), a touch panel, a sheet for a pen input, various sensors, a speaker, and a stylus (e.g., an S-pen).

In various embodiments of the present invention, referring to FIG. 2E(B), the electronic device 100 may be in a folded state. For example, when a user takes a picture using a camera function, a button 203 for taking a picture of the user may be disposed at an appropriate position (e.g., an area that can be easily touched (e.g. by a finger), with the electronic device 100 gripped by one hand) of a display (e.g., a display 121) that does not appear within the user's view. In various embodiments of the present invention, the whole rear display (e.g., a display 121) may be set to an area for taking a picture. In this case, the user may take a picture of the user by touching the rear of the display.

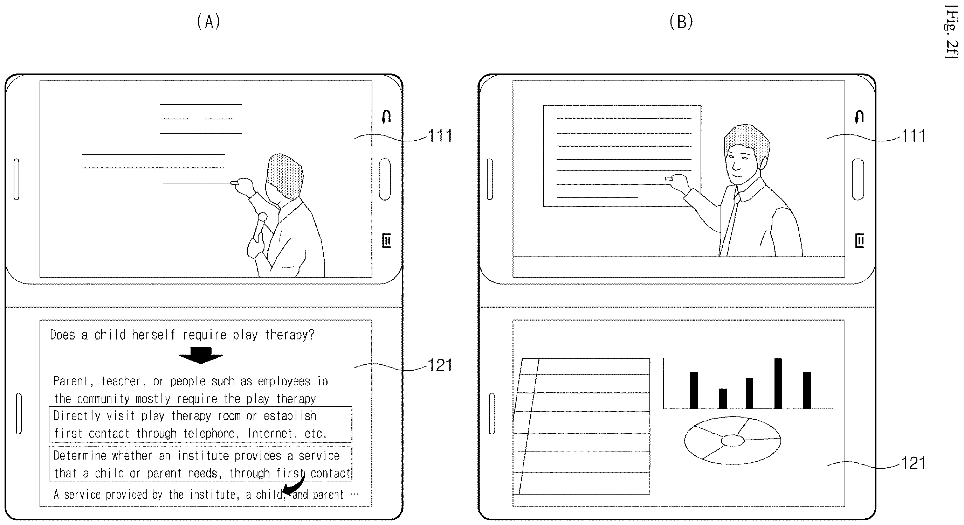

FIGs. 2F(A) and 2F(B) are diagrams showing an example in which a display for outputting contents is determined based on a display state or performance, according to an embodiment of the present invention.

In various embodiments of the present invention, an electronic device may determine a display for outputting contents or objects, based on a state or performance of each display. If resolution of a display 111 is different from that of a display 121, for example, if a resolution of the display 111 is higher than that of the display 121, the electronic device 100 may output the contents to the display 111. In this case, the contents may be a screen where a video (e.g., a video lecture) is reproduced. Also, at least one object may include a memo application, lecture material, and so on, which are needed while a user watches the video.

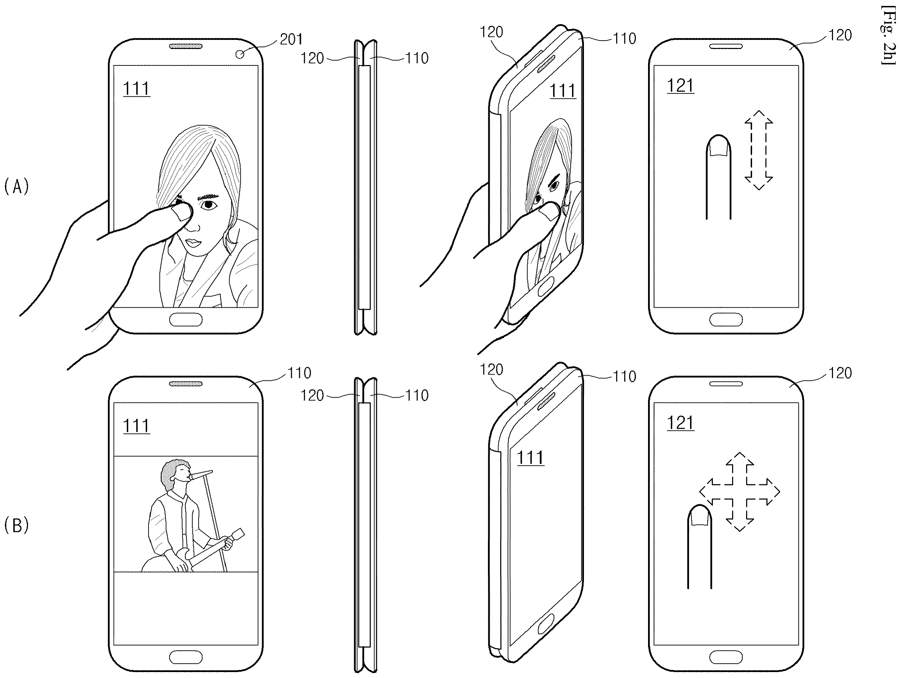

In various embodiments of the present invention, the electronic device 100 may sense positions or disposition states of a plurality of displays that the electronic device 100 includes. Based on the sensing result, the electronic device 100 may output data (e.g., contents) to a display appearing within the user's view and may use a display, which does not appear within the user's view, as an input device (e.g., outputting an input interface (e.g. a keypad or a QWERTY keyboard)). This is more fully described below with reference to FIG. 2H.

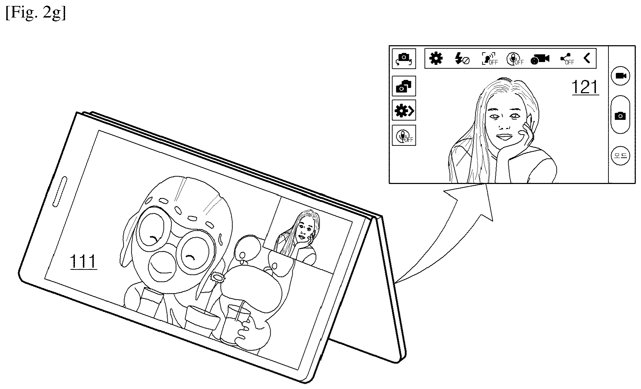

FIG. 2G is a diagram in which contents and objects are output to displays, according to an embodiment of the present invention.

Referring to FIG. 2G, in the event where images or moving pictures are taken using a camera module (e.g., a camera module 203) while first contents (e.g., a moving picture) are displayed on a display 111, second contents (e.g., an image or moving picture of a subject) taken by the camera module may be overlaid on the first contents of the display 111. In this case, objects associated with the second contents may be output to the display 111. For example, the subject and control and menu objects associated with taking images or moving pictures may be output to the display 121.

In various embodiments of the present invention, a child may sit at one side of an electronic device shown in FIG. 2G, and a person (e.g., a parent) may sit at the other side thereof to take an image of the child. In this case, a camera module may take a picture of the child that sits in front of the display 111. Contents (e.g., first contents), such as a cartoon or an animation, may be output to the display 111 to make the child focus his/her attention on image taking (or to make the child not realize that an image is being taken). Also, a subject of taking an image (e.g., a child) may be output to a portion of a screen area of the display 111 as contents (e.g., second contents). In addition, a menu for controlling an image of the subject (e.g., a child), taking an image, or effects, that is, a plurality of objects, may be output to the display 121 that is placed at the opposite side of the display 111.

In various embodiments of the present invention, a subject may be at one side of an electronic device, and a photographer may be at the other side thereof. A preview screen (e.g., contents) taken by a camera image may be output to a display that faces the subject, and image acquisition-associated function menus (e.g., objects) may be output to a display that faces the photographer. In this case, the subject may be the photographer.

FIGs. 2H(A) to 2H(B) are diagrams of an input based on a folded state of a display, according to an embodiment of the present invention.

Referring to FIG. 2H(A), for example, there is illustrated a shape of an electronic device that is folded such that a plurality of displays are fully laid over in order that a user takes a picture using a camera module 201. In this case, the electronic device may determine whether it is fully folded, using the above-described magnet or magnetic sensor or additional sensors (e.g., an illumination sensor and an inertial sensor). As a consequence of determining that the electronic device is fully folded, a designated display (e.g., a display appearing within the user's view, a display where a camera module 201 is disposed, or a display where an application is running) may be switched into an active state, and another display(s) (e.g., a display not appearing within the user's view, a display where a value of illumination sensed by an illumination sensor is less than a reference value, or a display where an application is not running) may be switched into an inactive state. In this case, the inactive state may be a state where an input and an output of a display panel (or touch panel) are each "OFF." In addition, the inactive state may be a state where an output of the display panel is "OFF" and the sensing of an input is activated. In this case, the electronic device may use the inactivated display 121 as an input area for controlling contents to be output to the activated display 111. For example, if the user scrolls the inactivated display 121 (e.g., a rear display), the electronic device may zoom in/out to/from the subject. For example, the electronic device may take a picture of the subject when the user provides any touch input with respect to the inactivated display.

Referring to FIG. 2H(B), during execution of a music player, the display 111 that faces the front of the electronic device may be activated, and the display 121 that faces the rear of the electronic device may be inactivated (e.g., a data output is "OFF" and the monitoring of an input is possible). In this case, a control instruction such as play/ pause/next/previous/volume-up/volume-down may be executed by an input such as a user scrolling the rear display 121 in any direction or a user tapping the rear display 121.

In various embodiments of the present invention, a display to which contents are output may be selected according to relative locations of a first display and a second display. In the event that a certain display is inactivated as relative locations of plural displays included in an electronic device are changed (e.g., the event that a first display (e.g., a display 111) is inactivated as the electronic device is folded), at least a portion of contents that are being output to the first display may be output through another display (e.g., a display 121). For example, a portion of information on contents that are being output to the first display (e.g., an object being output through a second display) may be output through another display, for example, the second display (or a first display) or a third display (e.g., a third display in an electronic device including three or more displays) that differs from the first display or the second display.

In various embodiments of the present invention, a display for outputting contents and a display for outputting objects may be determined based on one reference or a combination of references described above.

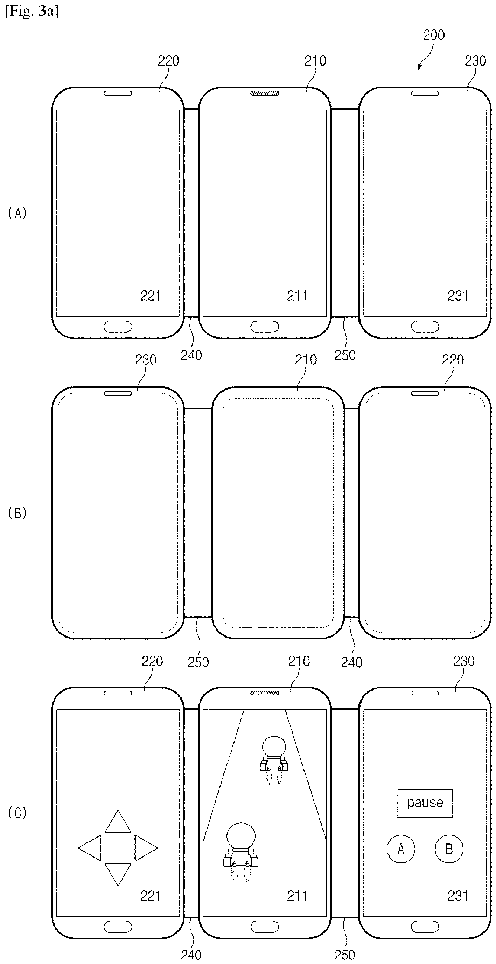

FIGs. 3A(A) to 3A(C) are diagrams of an electronic device including three displays, according to an embodiment of the present invention.

In FIGs. 1A(A) to 1C(B), an embodiment of the present invention is exemplified as an electronic device 100 that includes two displays. In FIGs. 3A(A) to 3B(B), an embodiment of the present invention is exemplified as an electronic device 200 that includes three displays. In various embodiments of the present invention, in addition to the example shown in FIGs. 1A(A) and 3A(A), an electronic device may include four or more displays. Below, a description on an electronic device (e.g., the electronic device 100 or the electronic device 200) having two or more displays may be extended and applied into a general description of an electronic device including a plurality of displays, as being understood by a person skilled in the art.

Referring to FIG. 3A(A), an electronic device 200 includes a main body 210, a first sub body 220, and a second sub body 230. The electronic device 200 further includes a first connection portion 240 for connecting the main body 210 and the first sub body 220 and a second connection portion 250 for connecting the main body 210 and the second sub body 230. The bodies 210, 220, and 230 may include displays 211, 221, and 231, respectively. The displays 211, 221, and 231 may be electrically connected through a connection circuit or a connection member such as a Flexible Printed Circuit Board (FPCB). In FIG. 3A(B), the rear of the electronic device 200 shown in FIG. 3A(A) is illustrated.

The electronic device 200 may determine the display 211 and the display 221 of the three displays 211, 221, and 231 as a display for outputting contents. The electronic device 200 may output the contents to the displays 211 and 221 and may output at least one object associated with the contents to the display 231.

In various embodiments of the present invention disclosed in the present disclosure, an electronic device, which comprises a first display and a second display, may determine the first display for outputting contents and the second display for outputting objects. For example, in this specification, the term "first display" may indicate a display where contents are output, and the term "second display" may indicate a display where at least one object associated with the contents is output.

In an embodiment of the present invention, in a device including three displays, contents may be output to two displays of the three displays, and objects may be output to the other display. In this case, the electronic device may determine a first display for outputting contents (that is, the two displays may correspond to the first display). Also, the electronic device may additionally determine a display for outputting contents (or, the reset of the contents not output to the first display). Plural displays for outputting contents may be selected at the same time. The electronic device may select a display, which is determined to not output contents, as a second display for outputting objects.

In FIG. 3A(A), the electronic device 200 may determine a display (e.g., a first display) for outputting contents and a display (e.g., a second display) for outputting objects, based on various conditions. This is more fully described below.

In various embodiments of the present invention, the electronic device 200 may determine a first display and a second display, based on relative locations of displays. For example, the electronic device may select the display 211 placed at the center and the display 211 placed at the left as a display for outputting contents. In this case, contents may be output to the display 211 and the display 221, and objects may be output to the display 231.

In various embodiments of the present invention, the electronic device 200 may determine a display for outputting contents and a display for outputting objects, based on information on a user of the electronic device 200. For example, when the user is left-handed, the electronic device 200 may select the display 211 placed at the center and the display 231 placed at the right as the first display for outputting contents. In this case, the electronic device 200 may display an object(s) on the display 221 placed at the left that includes a menu for controlling contents or a menu for editing the contents. The above-described display method may make it possible to improve user convenience of the electronic device 200.

In various embodiments of the present invention, the first display and the second display may be determined through an above-described or following reference or a combination of above-described or following references. For example, if the electronic device 200 is reversely folded by 180 degrees and the user is left-handed, the electronic device 200 may output contents to the displays 211 and 221 (e.g., select one of the display 211 or the display 221 as the first display) and may output an object(s) associated with the contents to the display 231 (e.g., a second display) placed at the left.

In various embodiments of the present invention, the electronic device 200 may determine a display for outputting contents and a display for outputting an object(s), based on a running application. Referring to FIG. 3A(C), for example, when a game application is running, the electronic device 200 may determine the display 211 placed at the center as a display for outputting contents and may output a game screen (e.g., soccer, boxing, or racing) to the display 211. In this case, the electronic device 200 may display an object including a control menu for a directional operation on the display 221 placed at the left and may display, on the display 231 placed at the right, an instruction menu for making character conduct designated actions (e.g., jump, shot, and punch). In this embodiment of the present invention, objects with different characteristics may be appropriately distributed and output to the display 221 and the display 231. In various embodiments of the present invention, objects as well as contents may be output to a plurality of displays. The electronic device 200 may output at least one object to each display appropriately or according to a designated classification.

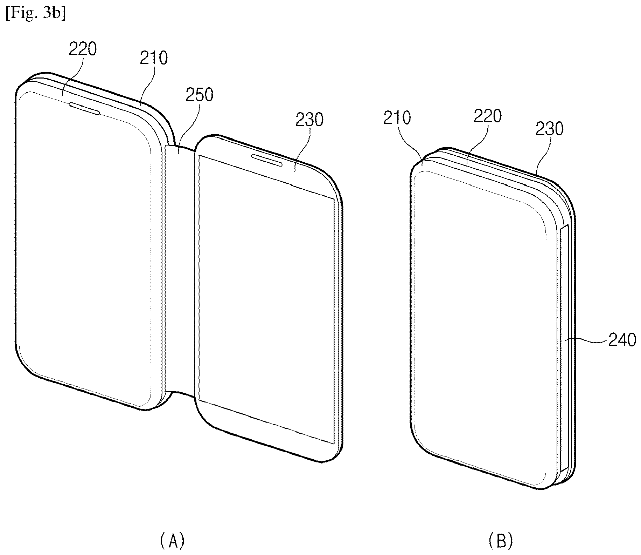

FIGs. 3B(A) and 3B(B) are diagrams of a folded state of an electronic device, according to an embodiment of the present invention.

Referring to FIG. 3B(A), a main body 210 and a first sub body 220 of an electronic device 200 may be folded to face each other, and a second sub body 230 may not be folded. In various embodiments of the present invention, the electronic device 200 may determine that a user does not view displays of the main body 210 and the first sub body 220 excluding the second sub body 230 and may then interrupt outputs to the corresponding displays. As illustrated in FIG. 3B(B), if the electronic device 200 is fully folded such that the second sub body 230 covers the first sub body 220, then the electronic device 200 may interrupt outputs to all displays.

In various embodiments of the present invention, when bodies of the electronic device 200 are fixed to have a predetermined angle (e.g., 60 degrees) (e.g., the bodies form a triangle shape and one thereof contacts a surface (e.g. a ground)), the electronic device 200 may output data to a display, which appears in the user's view, using a combination of various sensors described above. Also, in various embodiments of the present invention, if the first sub body 220 is folded in the back of the main body 210 and displays of the main body 210 and the second sub body 230 appear within the user's view, the electronic device 200 may output contents to the display (e.g., a display 211) of the main body 210, may output an object(s) associated with the contents to the display (e.g., a display 231) of the second sub body 230, and may interrupt an output to the display (e.g., a display 221) of the first sub body 220.

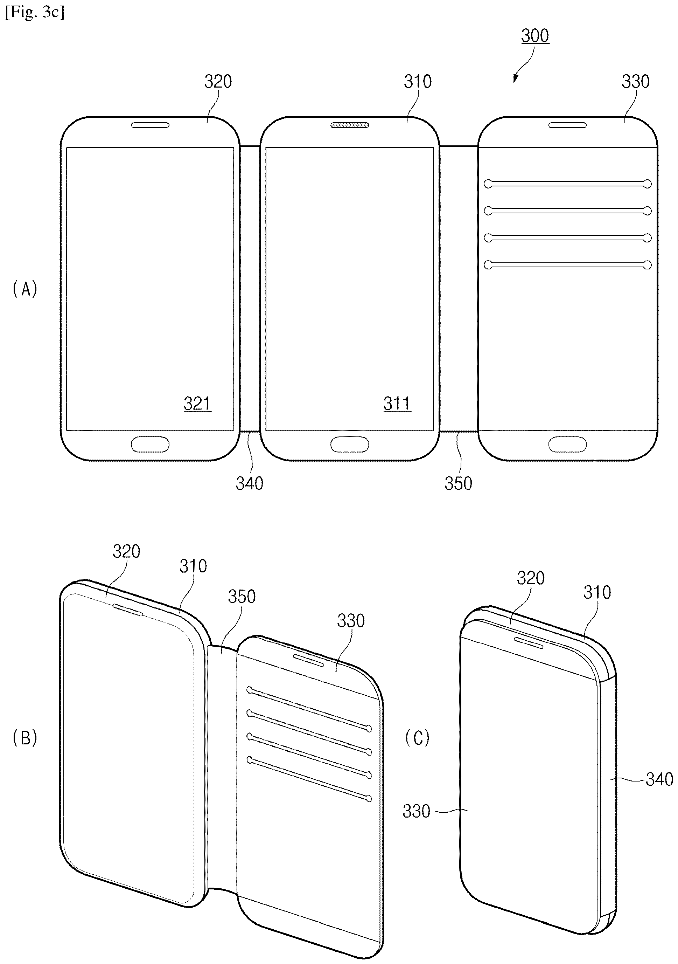

FIGs. 3C(A) and 3C(C) are diagrams of a folded shape of an electronic device including two displays and an additional cover, according to an embodiment of the present invention.

Referring to FIG. 3C(A), an electronic device 300 comprises a first body 310, a second body 320, and a cover 330. The cover 330 may be implemented in the form of a card holder. In various embodiments of the present invention, if the cover 330 is connected to the right of the first body 310, the cover 330 may make a user experience inconvenient for inputting on a display 311 of the first body 310. In this case, the electronic device 300 may permit contents to be output to the display 311 and objects such as a user input menu output to a display 321.

Referring to FIG. 3C(B), the first body 310 and the second body 320 of the electronic device 300 may be folded to face each other, and the cover 330 thereof may not be folded. In various embodiments, the electronic device 300 may determine that displays included in the first and second bodies 310 and 320 do not appear within the user's view and may then interrupt outputs to the corresponding displays. As illustrated in FIG. 3C(C), the electronic device 300 may be fully folded such that the cover 330 is on the second body 320.

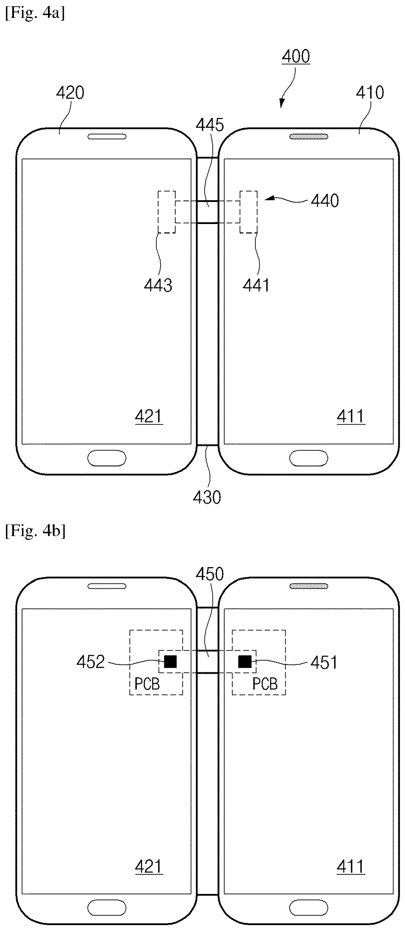

FIGs. 4A and 4B are diagrams of a connection structure between plural displays, according to an embodiment of the present invention.

Referring to FIG. 4A, an electronic device 400 may comprise a first body 410, a second body 420, and a connection portion 430. The first body 410 may include a first display 411, and the second body 420 may include a second display 421.

In various embodiments of the present invention, the first body 410 may include certain components (e.g., a control module, a communication module, a memory, a sensor, etc.) of the electronic device 400, and the second body 420 may include a component(s) for driving a panel for the second display 421 and/or the second display 421. The electronic device 400 may determine a first display (e.g., a display 411) for outputting contents and a second display (e.g., a display 421) for outputting an object(s) and may provide data to be output to each display. A control module of the electronic device 400 may be included in the first body 410, for example.

In various embodiments of the present invention, the electronic device 400 may include a connection module 440 that transfers output data or a signal for controlling an output of the second display 421. The connection module 440 may be a communication module that controls an output of the second display 421 and performs bidirectional communication such that a touch signal generated at the second display 421 is transferred. The connection module 440 may be connected to one point 441 of a circuit substrate (e.g., a Printed Circuit Board (PCB)) included in the first body 410 and to one point 443 placed in the second body 420 through an interconnection 445. In various embodiments of the present invention, the connection module 440 may be functionally connected to a control module of the electronic device 400 at the first body 410 and may be functionally connected with a display control module for controlling the display 421 at the second body 420.

Referring to FIG. 4B, the electronic device 400 may include wireless communication modules 451 and 452 that are respectively connected with the PCBs and are respectively included in the bodies 410 and 420. For example, the electronic device 400 may include the wireless communication modules 451 and 452 that transmit or receive output data or control signals. The wireless communication modules 451 and 452 may include at least one of a Wireless Fidelity (Wi-Fi) device, a Bluetooth (BT) device, a Global Positioning System (GPS), a Near Field Communication (NFC) device, a 60 GHz short wave communication device, or an optical communication device according to an Infrared Data Association (IrDA) standard for transmitting data or control signals of a Universal Serial Bus (USB), a High Definition Multimedia Interface (HDMI), a Recommended Standard 232 (RS-232), a Mobile Industry Processor Interface (MIPI), an Inter-Integrated Circuit (I2C), or a Plain Old Telephone Service (POTS). Also, the wireless communication module may further include a radio wave guide 450 that is made with a non-conductor, such as plastic having a dielectric permittivity, a conductor such as copper (Cu), or a memory shape alloy to improve the transmission performance of electromagnetic waves in space. For example, in the 60 GHz short wave communication device, performance may be reduced due to loss of electromagnetic waves generated according to a direction of a transceiver module. However, the radio wave guide 450 may connect to the wireless communication modules 451 and 452, thereby making it possible for the electromagnetic waves to propagate in a constant direction.

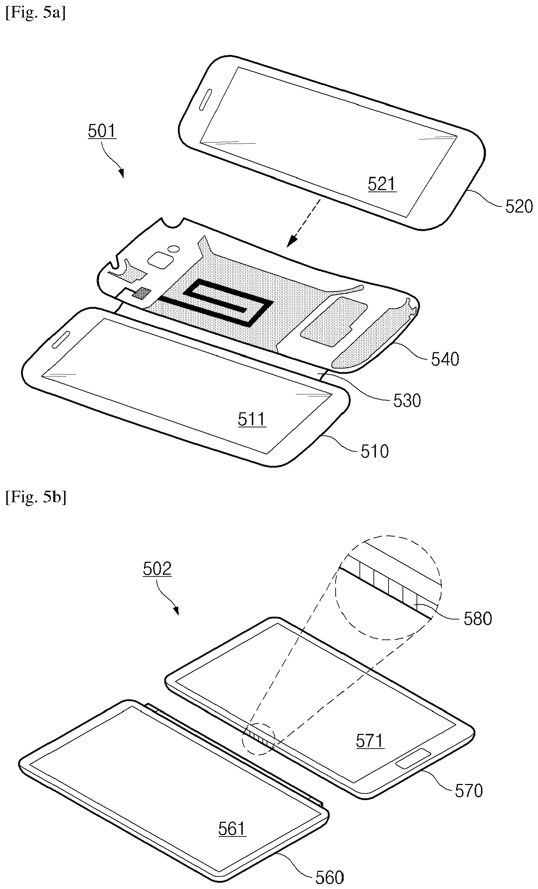

FIGs. 5A and 5B are diagrams of plural displays connected, according to an embodiment of the present invention.

Referring to FIG. 5A, a body 520 including a display 521 may be attached to a case structure 540 of an electronic device 501. The case structure 540 may have a connection structure for connection with the body 520 that is prepared at an edge or any place of the case structure 540. In various embodiments of the present invention, a display control module to control the display 521 may be connected with a control module included in the body 510 through a connection module (e.g., a connection module 440) by the attachment. In various embodiments of the present invention, if implemented in a multi-display manner, an electronic device 501 may determine a display (e.g., a display 511) for outputting contents and a display (e.g., the display 521) for outputting an object(s) associated with the contents. In various embodiments of the present invention, when the body 520 is removed or the electronic device 501 remains at a single display state, the electronic device 501 may output the contents and object to one display (e.g., the display 511).

Referring to FIG. 5B, the electronic device 502 includes a first body 560 and a second body 570 that are connected using a magnetic structure of the body 570. The electronic device 502 may determine whether the first body 560 and the second body 570 are connected, using a magnetic sensor, and may designate a display (e.g., a display 561) for outputting contents and a display (e.g., a display 571) for outputting an object associated with the contents, based on the determination result. In various embodiments of the present invention, when the first body 560 and the second body 570 are disconnected or the strength of a magnetic field sensed is below a reference, the electronic device 502 may output the contents and object to one display (e.g., a display 570).

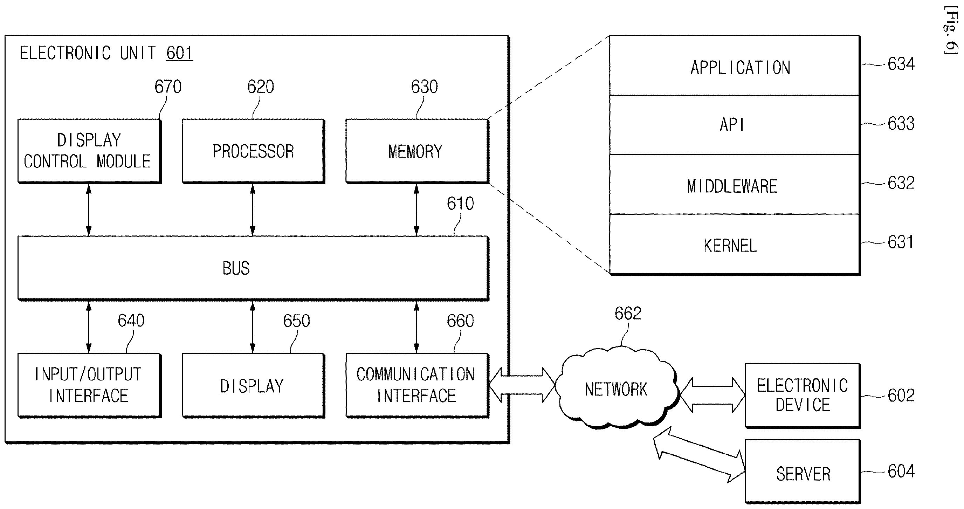

FIG. 6 is a block diagram of a communication environment of an electronic device 601, according to an embodiment of the present invention.

Referring to FIG. 6, the electronic device 601 (e.g., 100, 200, 300, 400, 501, 601) includes at least one of a bus 610, a processor 620, a memory 630, an input/output (I/O) interface 640, a display 650, a communication interface 660, and a display control module 670. The display 650 may include a plurality of displays. Also, the display control module 670 may include a plurality of display control modules (e.g., a first display control module and a second display control module) corresponding to a plurality of displays (e.g., a first display and a second display).

The bus 610 connects the above-described components and is a circuit for conveying communications (e.g., a control message) among the above-described components. In various embodiments of the present invention, the bus 610 connects the above-described displays and/or the above-described display control modules and conveys communications.

The processor 620 receives instructions from the above-described other components (e.g., the memory 620, the input/output interface 640, the display 650, the communication interface 660, and the display control module 670) through the bus 610, decodes the received instructions, and processes data or performs operations according to the decoded instruction.

The memory 630 stores instructions or data received from the processor 620 or other components (e.g., the input/output interface 640, the display 650, the communication interface 660, and the display control module 670) or generated by the processor 620 or the other components. The memory 630includes, for example, programming modules such as a kernel 631, middleware 632, an Application Programming Interface (API) 633, and an application 634. Each of the above-described programming modules may be implemented in the form of software, firmware, hardware, or a combination of at least two thereof.

The kernel 631 controls or manages system resources (e.g., the bus 610, the processor 620, and the memory 63) that execute operations or functions of the remaining other programming modules (e.g., the middleware 632, the application processing interface 633, and the application 634) or are used to call stored data. In addition, the kernel 631 provides an interface that permits the middleware 632, the application processing interface 633, or the application 634 to access discrete components of the electronic device 601 for control or management.

The middleware 632 performs a mediation role so that the API 633 or the application 634 may communicate with the kernel 631 to provide and receive data. In addition, with regard to task requests received from the application 634, the middleware 632 performs a control (e.g., scheduling or load balancing) on a task request using a method of assigning an order or priority for using a system resource (e.g., the bus 610, the processor 620, or the memory 630) of the electronic device 601 to the at least one application 634, for example.

The API 633 is an interface through which the application 634 controls a function provided by the kernel 631 or the middleware 632, and may include, for example, at least one interface or function (e.g., an instruction) for file control, window control, image processing, or character control, etc.

According to various embodiments of the present invention, the application 634 may include a Short Messaging Service/Multimedia Messaging Service (SMS/MMS) application, an e-mail application, a calendar application, an alarm application, a health care application (e.g., an application for measuring an exercise amount or a blood sugar level), or an environmental information application (e.g., an application for providing air pressure, humidity, or temperature information), an Optical Character Recognition (OCR) application, an image editing application, a call/message application, a memo note application, an Internet application, etc. Additionally or generally, the application 634 may be an application related to information exchange between the electronic device 601 and an external electronic device (e.g., an electronic device 602 or a server 604). An application related to information exchange may include, for example, a notification relay application for transferring certain information to an external electronic device or a device management application for managing an external electronic device.

For example, a notification relay application may include a function for transferring notification information occurring from another application (e.g., an SMS/MMS application, an e-mail application, a health care application, or an environmental information application) of the electronic device 601 to an external electronic device (e.g., an electronic device 602 or a server 604). Additionally or generally, the notification relay application, for example, may manage (e.g., install, delete, or update) at least a portion of functions (e.g., turn on/turn off an external electronic device (or a portion of a constituent part) or control the brightness (or resolution) of a display) of an external electronic device (e.g., an electronic device 602 or a server 604), an application operating on the external electronic device, or a service (e.g., a communication service or a message service) provided by the external electronic device.

According to various embodiments of the present invention, the application 634 may include an application that is designated depending on an attribute (e.g., a type of electronic device) of an external electronic device (e.g., an electronic device 602 or a server 604). For example, in the case where the external electronic device is an MP3 player, the application 634 includes an application related to music reproduction. Similarly, in the case where the external electronic device is a mobile medical device, the application 634 includes an application related to health care. According to an embodiment of the present invention, the application 634 may include at least one of an application designated to the electronic device 601 or an application received from the external electronic device (e.g., an electronic device 602 or a server 604).

The I/O interface 640 transfers an instruction or data input from a user through an I/O unit (e.g., a sensor, a keyboard, a touchscreen, a speaker, or a microphone) to the processor 620, the memory 630, the communication interface 660, or the display control module 670, for example, through the bus 610. For example, the I/O interface 140 may provide the processor 620 with a user's touch data input through a touchscreen. Also, the I/O interface 640 may output an instruction or data received from the processor 620, the memory 630, the communication interface 660, or the display control module 670 through the bus 610, by means of the I/O unit (e.g., a speaker or a display). For example, the I/O interface 640 may output voice data processed through the processor 620 to a user through a speaker.

The display 650 displays a variety of information (e.g., multimedia data or text data) for a user. In various embodiments of the present invention, the display 650 may include a plurality of displays and may display contents on at least one display and an object associated with the contents on at least one other display.

The communication interface 660 establishes communication between the electronic device 601 and an external electronic device (e.g., an electronic device 602 or a server 604). For example, the communication interface 660 may be connected to a network 662 through wireless communication or wired communication to communicate with an external electronic device. The wireless communication may include at least one of, for example, Wi-Fi, Bluetooth (BT), Near Field Communication (NFC), Global Positioning System (GPS), and cellular communication (e.g., Long Term Evolution (LTE), LTE Advanced (LTE-A), Code Division Multiple Access (CDMA), Wideband CDMA (WCDMA), Universal Mobile Telecommunications System (UTMS), Wireless Broadband (WiBro), or Global System for Mobile communications (GSM)). The wired communication may include at least one of, for example, a Universal Serial Bus (USB), a High Definition Multimedia Interface (HDMI), a Recommended Standard-232 (RS-232), or a Plain Old Telephone Service (POTS).

In various embodiments of the present invention, the communication interface 660 may receive additional information on contents from an external device such as the electronic device 602 or the server 604. For example, the electronic device 601 may request and receive, from an external device, information on an item, corresponding to a designated input, from among various items such as an image, a text, and a moving picture included in contents to be expressed on at least one display. Here, the designated input may include a touch input, a hovering input, focusing, auto recognition, etc. on at least one item. The additional information may be output to at least one other display, different from the at least one display, as an object.

According to an embodiment of the present application, the network 662 may be a telecommunications network. The telecommunications network may include at least one of a computer network, the Internet, an Internet of Things (IoT), or a telephone network. According to an embodiment of the present invention, a protocol (e.g., a transport layer protocol, a data link layer protocol, or a physical layer protocol) for communication between the electronic device 601 and an external electronic device may be supported by at least one of the application 634, the application programming interface 633, the middleware 632, the kernel 631, the communication interface 660, or the display control module 670.

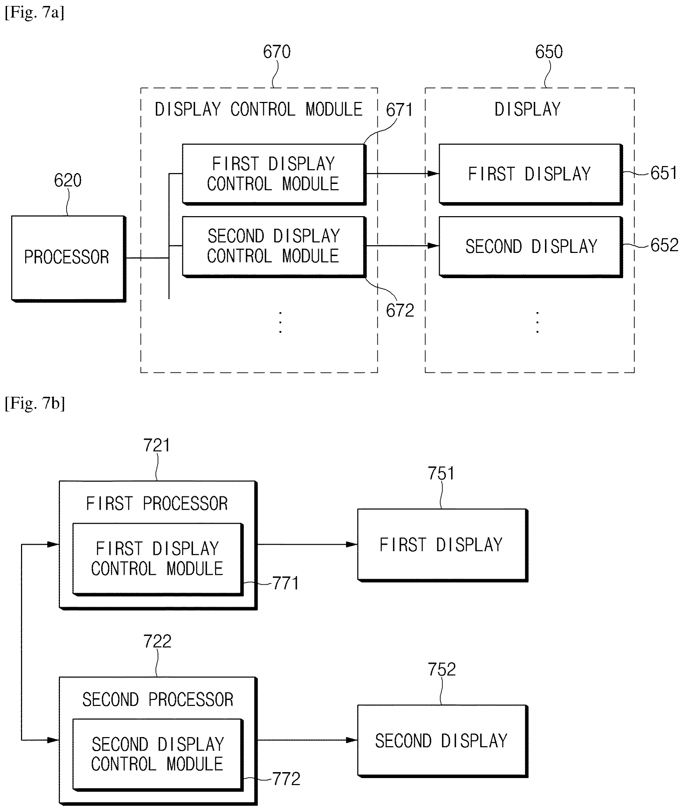

The display control module 670 outputs contents to the at least one display selected by the processor 620 based on at least the determination and may output at least one object associated with the contents to a display different from the at least one display. According to various embodiments of the present invention, the display control module 670 may process at least a portion of information acquired from any other component (e.g., the processor 620, the memory 630, the input/output interface 640, or the communication interface 660) and may provide the processed result to a communication module (e.g., the communication interface 660) in various methods. An operation between the processor 620 and the display control module 670 is more fully described below with reference to FIGs. 7A and 7B.

FIG. 7A is a block diagram of a display control method according to an embodiment of the present invention.

Referring to FIG. 7A, a processor 620 communicates with a display control module 670 that includes a plurality of display control modules (e.g., a first display control module 671, a second display control module 672, etc.). The display control module 670 controls data to be output to a display 650. For example, the first display control module 671 controls data to be output to a first display 651, and the second display control module 672 controls data to be output to a second display 652. Each display control module 671, 672 provides contents or objects to be expressed on each display according to a determination of the processor 620.

In various embodiments of the present invention, the processor 620 and the display control module 670 may be disposed at a body, including the first display 651, from among bodies of an electronic device (e.g., an electronic device 601). The second display 652 may be connected to the display control module 670 through a connection module (e.g., a connection module 440). In various embodiments of the present invention, the first display control module 671 may be included in a body where the first display 651 is placed, and the second display control module 672 may be included in a body where the second display 652 is placed. In various embodiments of the present invention, each of the display control modules 671 and 672 may be integrated into an Integrated Circuit (IC) or chip together with a processor (e.g., a processor that includes the display control module 671, and another processor includes the display control module 672). In addition, each of the display control modules 671 and 672 may include a frame buffer. In each of the display control modules 671 and 672, the frame buffer may store data to be output to a corresponding display. For example, the display control module 670 may include a display-dedicated processor such as a Display Driver IC (DDI).

In various embodiments of the present invention, the display control module 670 may be a program executed by the processor 620 or logic. The display control module 670 and the processor 620 may be formed of the same entity (e.g., a System on Chip (SoC)).

FIG. 7B is a block diagram of a display control method according to an embodiment of the present invention.

Referring to FIG. 7B, an electronic device (e.g., the electronic device 601) may include a plurality of processors. In addition, each processor may include a display control module. For example, the electronic device may include a first processor 721 in which a first display control module 771 is embedded, and the first display control module 771 may control a first display 751. The first processor 721 and the first display 751 may be placed in the same body as the electronic device. Also, the electronic device may include a second processor 722 in which a second display control module 772 is embedded, and the second display control module 772 may control a second display 752. The second processor 722 and the second display 752 may be placed in a body different from the body in which the first processor 721 is placed.

In various embodiments, the first processor 721 and the second processor 722 may share control information. For example, the first processor 721 may determine one display, which will output contents, from among a plurality of displays and may share corresponding information with the second processor 722. Based on the determination and shared information, the first display control module 711 and the second display control module 722 output contents or objects to corresponding displays, respectively.

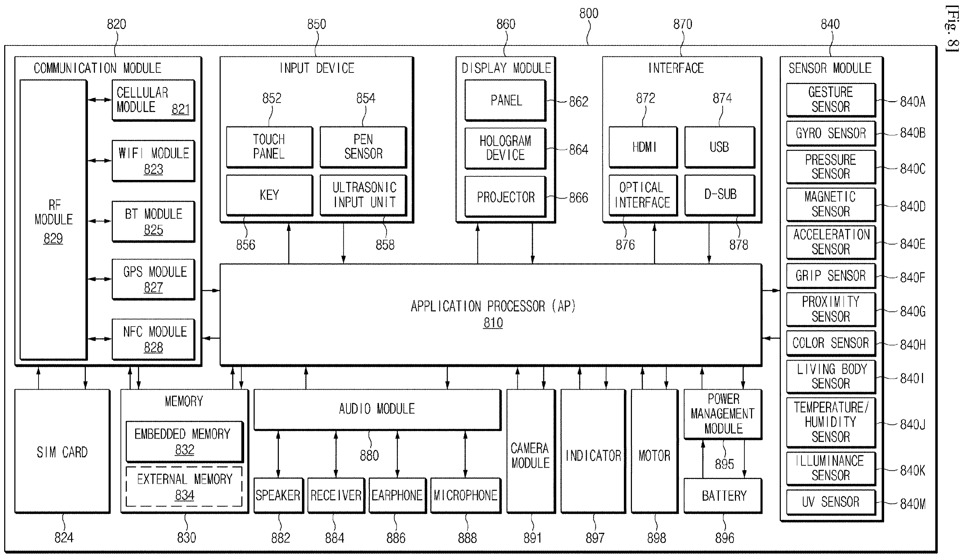

FIG. 8 is a block diagram of an electronic device 800, according to an embodiment of the present invention.

An electronic device 800 may include a part or all of the components of the electronic device 601 shown in FIG.6.

Referring to FIG. 8, the electronic device 800 includes at least one of one or more Application Processor (AP) 810, a communication module 820, a Subscriber Identity Module (SIM) card 824, a memory 830, a sensor module 840, an input device 850, a display module 860, an interface 870, an audio module 880, a camera module 891, a power management module 895, a battery 896, an indicator 897, or a motor 898.

The AP 810 (e.g., a processor 620) may drive an Operating System (OS) or an application to control a plurality of hardware or software components connected to the AP 810 and may process and compute a variety of data including multimedia data. The AP 810 may be implemented with an SoC, for example. According to an embodiment of the present invention, the AP 810 may further include a Graphics Processing Unit GPU (e.g., a display control module 670).

The communication module 820 (e.g., the communication interface 660) transmits and receives data when there are conveyed communications between other electronic devices (e.g., an electronic device 602 and a server 604) connected with the electronic device 800 (e.g., an electronic device 601) through a network. According to an embodiment of the present invention, the communication module 820 may include a cellular module 821, a Wi-Fi module 823, a BT module 825, a GPS module 827, an NFC module 828, and an RF module 829.

The cellular module 821 provides voice communication, video communication, a character service, or an Internet service through a communication network (e.g., an LTE, an LTE-A, a CDMA, a WCDMA, a UMTS, a WiBro, or a GSM). Also, the cellular module 821 may perform discrimination and authentication of an electronic device within a communication network using a SIM card 824, for example. According to an embodiment of the present invention, the cellular module 821 may perform at least a portion of functions that the AP 810 provides. For example, the cellular module 821 may perform at least a portion of a multimedia control function.

According to an embodiment of the present invention, the cellular module 821 may include a Communication Processor (CP). Also, the cellular module 821 may be implemented with, for example, an SoC. Though components such as the cellular module 821 (e.g., a CP), the memory 830, or the power management module 895 are illustrated as being components independent of the AP 810 in FIG. 8, the AP 810 according to an embodiment of the present invention may be implemented to include at least a portion (e.g., a cellular module 821) of the above components.

According to an embodiment of the present invention, the AP 810 or the cellular module 821 (e.g., CP) may load and process an instruction or data received from nonvolatile memories respectively connected thereto or from at least one of the other elements in the nonvolatile memory. Also, the AP 810 or the cellular module 821 may store data received from at least one of the other elements or generated by at least one of the other elements at a nonvolatile memory.

Each of the Wi-Fi module 823, the BT module 825, the GPS module 827, and the NFC module 828 may include a processor for processing data exchanged through a corresponding module, for example. In FIG. 8, an embodiment of the present invention is exemplified as the cellular module 821, the Wi-Fi module 823, the BT module 825, the GPS module 827, and the NFC module 828 are separate blocks, respectively. According to an embodiment of the present invention, at least a portion (e.g., two or more components) of the cellular module 821, the Wi-Fi module 823, the BT module 825, the GPS module 827, and the NFC module 828 may be included within one Integrated Circuit (IC) or an IC package. For example, at least a portion (e.g., a communication processor corresponding to the cellular module 821 and a Wi-Fi processor corresponding to the Wi-Fi module 823) of communication processors corresponding to the cellular module 821, the Wi-Fi module 823, the BT module 825, the GPS module 827, and the NFC module 828 may be implemented with one SoC.

The RF module 829 transmits and receives data, for example, an RF signal. The RF module 829 may include a transceiver, a Power Amplifier Module (PAM), a frequency filter, or Low Noise Amplifier (LNA). Also, the RF module 829 may further include parts for transmitting and receiving an electromagnetic wave in space in wireless communication that include a conductor or a conductive wire. In FIG. 8, an embodiment of the present invention is exemplified as the cellular module 821, the Wi-Fi module 823, the BT module 825, the GPS module 827, and the NFC module 828 are implemented to share one RF module 829. According to an embodiment of the present invention, at least one of the cellular module 821, the Wi-Fi module 823, the BT module 825, the GPS module 827, or the NFC module 828 may transmit and receive an RF signal through a separate RF module.

The SIM card 824 is a card that includes a subscriber identification module and is inserted into a slot formed at a certain position within the electronic device. The SIM card 824 may include unique identification information (e.g., an Integrated Circuit Card Identifier (ICCID)) or subscriber information (e.g., Integrated Mobile Subscriber Identity (IMSI)).

The memory 830 (e.g., memory 630) may include an embedded memory 832 or an external memory 834. For example, the embedded memory 832 may include at least one of a volatile memory (for example, a Dynamic Random Access Memory (DRAM), Static RAM (SRAM), Synchronous Dynamic RAM (SDRAM), etc.), or a nonvolatile memory (e.g., a One Time Programmable Read Only Memory(OTPROM), Programmable ROM (PROM), Erasable and Programmable ROM (EPROM), Electrically Erasable and Programmable ROM (EEPROM), mask ROM, flash ROM, NAND flash memory, or NOR flash memory).

According to an embodiment of the present invention, the embedded memory 832 may be a Solid State Drive (SSD). The external memory 834 may further include a flash drive, for example, a Compact Flash (CF) drive, a Secure Digital (SD) memory card, a Micro-Secure Digital (SD) memory card, a mini-SD memory card, an extreme Digital (xD) memory card, or a memory stick. The external memory 834 may be functionally connected to the electronic device 800 through various interfaces. According to an embodiment of the present invention, the electronic device 800 may further include storage (or a storage medium) such as a hard disk drive.

The sensor module 840 measures a physical quantity or may detect an operation state of the electronic device 800. The sensor module 840 converts the measured or detected information to an electrical signal. The sensor module 840 may include at least one of a gesture sensor 840A, a gyro sensor 840B, a pressure sensor 840C, a magnetic sensor 840D, an acceleration sensor 840E, a grip sensor 840F, a proximity sensor 840G, a color sensor 840H (e.g., a Red/Green/Blue (RGB) sensor), a living body sensor 840I, a temperature/humidity sensor 840J, an illuminance sensor 840K, or an Ultra Violat (UV) light sensor 840M. Additionally or generally, the sensor module 840 may further include an Electronic nose (E-nose) sensor, an ElectroMyoGraphy sensor (EMG) sensor, an ElectroEncephaloGram (EEG) sensor, an ElectroCardioGram (ECG) sensor, a PhotoPlethysmoGraphy(PPG) sensor, an InfraRed (IR) sensor, an iris sensor, or a fingerprint sensor, for example. The sensor module 840 may further include a control circuit for controlling at least one or more sensors included therein.

The input device 850 may include a touch panel 852, a (digital) pen sensor 854, a key 856, or an ultrasonic input unit 858. The touch panel 852 recognizes a touch input using at least one of a capacitive type panel, a resistive type panel, an infrared type panel, or an ultrasonic wave type panel. Also, the touch panel 852 may further include a control circuit. In the case of the capacitive type panel, a physical contact or proximity recognition is possible. The touch panel 852 may further include a tactile layer. In this case, the touch panel 852 provides a tactile reaction to a user.

The (digital) pen sensor 854 may be implemented, for example, using a method, which is the same as or similar to receiving a user touch input, or using a separate sheet for recognition. The key 856, for example, may include a physical button, an optical key, or a keypad. The ultrasonic input unit 858 is a device which allows the electronic device 800 to detect a sound wave using a microphone (e.g., a microphone 888), determine data through an input tool generating an ultrasonic signal, and enable wireless recognition. According to an embodiment of the present invention, the electronic device 800 may receive a user input from an external unit (e.g., a computer or a server) connected thereto using the communication module 820.

The display module 860 (e.g., the output unit 650) may include a panel 862, a hologram device 864, or a projector 866. The panel 862 may be a Liquid-Crystal Display (LCD) or an Active-Matrix Organic Light-Emitting Diode (AMOLED). The panel 862, for example, may be implemented to be flexible, transparent, or wearable. The panel 862 and the touch panel 852 may be implemented with one module. The hologram device 864 may show a three-dimensional image in space using the interference of light. The projector 866 projects light onto a screen to display an image. The screen, for example, may be positioned internally or externally to the electronic device 800. According to an embodiment of the present invention, the display module 860 may further include a control circuit for controlling the panel 862, the hologram device 864, or the projector 866.

The interface 870, for example, may include an HDMI 872, a USB 874, an optical interface 876, or a D-subminiature (D-sub) connector 878. The interface 870, for example, may be included in the communication interface 160 illustrated in FIG. 1A(A). Additionally or generally, the interface 870, for example, may include a Mobile High Definition Link (MHL) interface, a SD card/Multi-Media Card (MMC) interface, or an Infrared Data Association (IrDA) standard interface.

The audio module 880 converts a sound to an electrical signal and vice versa. At least a portion of the components of the audio module 880, for example, may be included in the I/O interface illustrated in FIG. 1A(A). The audio module 880, for example, processes sound information that is input or output through the speaker 882, the receiver 884, the earphone 886, or the microphone 888.

The camera module 891 is a unit that acquires a still picture and a moving picture. According to an embodiment of the present invention, the camera module 891 may include one or more image sensors (e.g., a front image sensor or a rear image sensor), a lens, an Image Signal Processor (ISP), or a flash (e.g., a Light Emitting Diode (LED) flash or a xenon lamp).

The power management module 895 manages power of the electronic device 800. The power management module 895, for example, may include a Power Management Integrated Circuit (PMIC), a charger IC, or a battery gauge.

The PMIC, for example, may be embedded in an IC or an SoC semiconductor. A charging method may be classified as a wired method or a wireless method. The charger IC charges a battery and prevents an overvoltage or an overcurrent from being input from a charger. According to an embodiment of the present invention, the charger IC may include a charger IC for at least one of a wired charging method and a wireless charging method. The wireless charging method, for example, may be a magnetic resonance method, a magnetic induction method, or an electromagnetic method. An additional circuit for wireless charging, for example, circuits such as a coil loop, a resonance circuit, or a rectifier, may be further provided.

A battery gauge, for example, measures a remnant of electrical power in the battery 896, a voltage, a current, or a temperature during charging. The battery 896 stores or generates electrical power and supplies power to the electronic device 800 using the stored or generated electrical power. The battery 896, for example, may include a rechargeable battery or a solar battery.

The indicator 897 displays a certain state of the electronic device 800 or a portion (e.g., the AP 9810) thereof, including a booting state, a message state, or a charging state. The motor 898 converts an electrical signal to a mechanical vibration. The electronic device 800 may include a processing unit (e.g., a GPU) for supporting a mobile TV. The processing unit for supporting the mobile TV, for example, may process media data that is based on the standard of Digital Multimedia Broadcasting (DMB), Digital Video Broadcasting (DVB), or media flow.

Each of the above components of the electronic device according to an embodiment of the present invention may be implemented using one or more components, and a name of a relevant component may vary with the kind of the electronic device. The electronic device according to various embodiments of the present invention may include at least one of the above components. Also, a portion of the components may be omitted, or additional other components may be further included. Also, some of the components of the electronic device according to the present invention may be combined to form one entity, thereby making it possible to perform the functions of the relevant components substantially the same as before the combination.

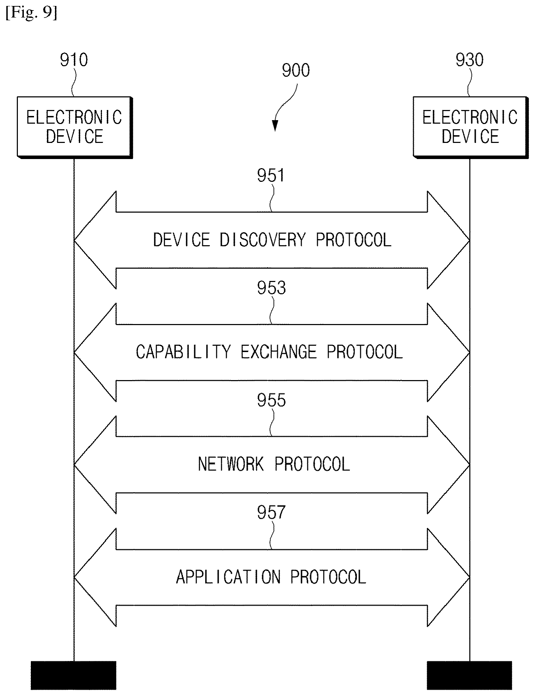

FIG. 9 is a diagram illustrating a communication protocol between electronic devices according to an embodiment of the present invention.

Referring to FIG. 9, for example, a communication protocol 900 may include a device discovery protocol 951, a capability exchange protocol 953, a network protocol 955, and an application protocol 957.

According to an embodiment of the present invention, the device discovery protocol 951 includes a protocol for detecting an external electronic device that electronic devices (e.g., an electronic device 910 or an electronic device 930) can communicate with and for connecting the detected external electronic device and the electronic devices. For example, based on the device discovery protocol 951, the electronic device 910 (e.g., an electronic device 601) detects the electronic device 930 (e.g., an electronic device 602) as a device that can communicate with the electronic device 910 through a communication method (e.g., Wi-Fi, BT, or USB) available at the electronic device 910. To communicate with the electronic device 930, the electronic device 910 obtains and stores identification information on the detected electronic device 930 using the device discovery protocol 951. The electronic device 910, for example, may set up a communication link with the electronic device 930, based on at least the identification information.

According to an embodiment of the present invention, the device discovery protocol 951 may be a protocol for mutual authentication between electronic devices. For example, the electronic device 910 may perform authentication between the electronic device 910 and the electronic device 930 based on communication information (e.g., a Media Access Control (MAC) address, a Universally Unique Identifier (UUID), a SubSystem IDentification (SSID), an Internet Protocol (IP) address) for connection with at least the electronic device 930.

According to an embodiment of the present invention, the capability exchange protocol 953 may be a protocol for exchanging information related to a function of a service that at least one of the electronic device 910 or the electronic device 930 can support. For example, the electronic device 910 and the electronic device 930 may exchange information related to a function of a service currently provided by the respective devices with each other through the capability exchange protocol 953. Exchangeable information may include identification information, indicating a specific service, from among a plurality of services that the electronic device 910 and the electronic device 930 can support. For example, the electronic device 910 may receive identification information of a certain service, which the electronic device 930 provides, from the electronic device 930 through the capability exchange protocol 953. In this case, the electronic device 910 may determine whether the electronic device 910 supports the certain service, based on the received identification information.

According to an embodiment of the present invention, the network protocol 955 is a protocol for controlling a data flow between the electronic devices (e.g., the electronic device 910 and the electronic device 930) connected for enabling communication, for example, a flow of data transmitted and received to provide a service in cooperation with electronic devices. For example, at least one of the electronic device 910 or the electronic device 930 may perform an error control or a data quality control using the network protocol 955. Additionally or generally, the network protocol 955 may determine a transmission format of data exchanged between the electronic device 910 and the electronic device 930. In addition, at least one of the electronic device 910 or the electronic device 930 may manage (e.g., a session connection or a session termination) at least a session for mutual data exchange using the network protocol 955.

According to an embodiment of the present invention, the application protocol 957 may be a protocol for providing a procedure or information that is used to exchange data related to a service provided to an external electronic device. For example, the electronic device 910 (e.g., an electronic device 601) may provide a service to the electronic device 930 (e.g., an electronic device 602 or a server 604) through the application protocol 957.

According to an embodiment of the present invention, the communication protocol 900 may include a standard communication protocol, a communication protocol (e.g., a communication protocol designated by a communication device manufacturer or a network supplier) designated by an individual or an organization, or a combination thereof.

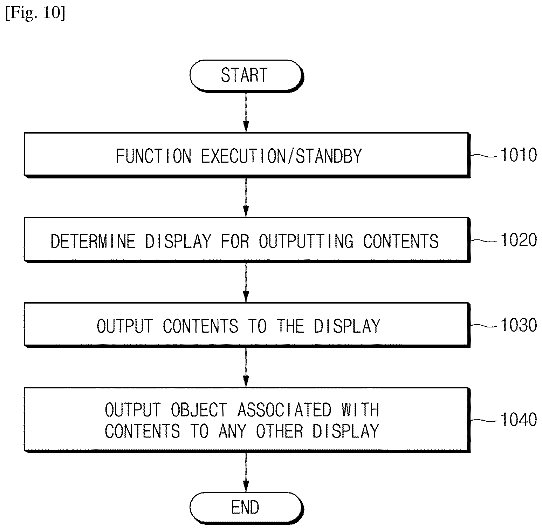

FIG. 10 is a flowchart of a method of outputting contents and objects using a plurality of displays, according to an embodiment of the present invention.

Referring to FIG. 10, in step 1010, an electronic device (e.g., an electronic device 100, 200, 300, 400, 500, 601, 800, or 910) including a plurality of displays performs a designated function or remains in a standby state. For example, the electronic device may execute any application using at least one of the plurality of displays.

In step 1020, the electronic device determines a display (e.g., a first display), which will output contents, from among the plurality of displays. In addition, the electronic device may determine at least one display (e.g., a second display) that differs from the display for outputting the contents. In various embodiments of the present invention, the electronic device may output an object(s) to all displays, excluding the first display for outputting the contents. Alternatively, the electronic device may output an object(s) to some of the remaining displays, excluding the first display for outputting the contents. For example, the electronic device may interrupt an output to a display which does not output contents or objects from among the plurality of displays.

In various embodiments of the present invention, the electronic device determines the first display for outputting contents, based on relative positions of the plurality of displays. For example, when the plurality of displays is vertically disposed (e.g., in the event that an electronic device 200 shown in FIG. 3A(A) rotates 90 degrees clockwise), the electronic device determines a display which satisfies a designated vertical position as the first display. In this case, the designated vertical position may indicate the uppermost display or a display disposed just under the uppermost display.

In various embodiments of the present invention, the electronic device determines the first display based on a designated reference. For example, the electronic device determines a display, selected by a user input, from among the plurality of displays as the first display. In this case, a selection User Interface (UI) may be provided to select the first display. In various embodiments of the present invention, the first display may be determined based on a user's habit of using the electronic device, a grip state of the electronic device, or whether the user is left-handed or right-handed.

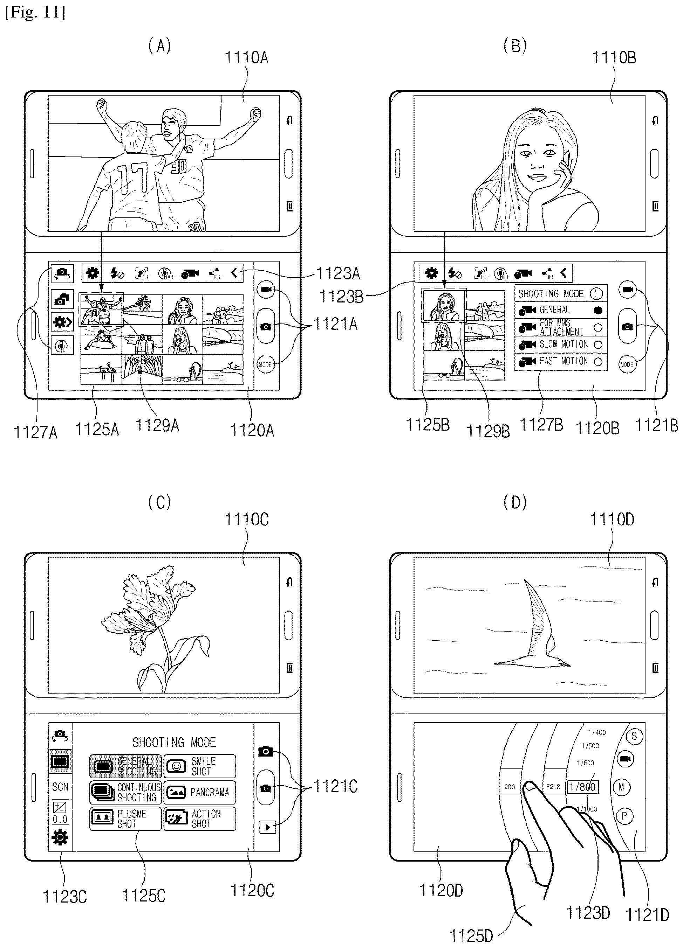

In various embodiments of the present invention, the electronic device determines the first display based on an arrangement or disposition of hardware components constituting the electronic device. For example, if the electronic device includes a camera module, it (e.g., a processor) determines the first display based on relative positions of the camera module and the display. For example, when a running camera module and a display A are placed in a first body, a processor determines the display A as the first display for outputting contents. In this case, the contents may be an image that is captured by the camera module. In addition, at least one object may include a menu for controlling the camera module. This will be more fully described below with reference to FIGs. 11A to 11D.

In step 1030, the electronic device outputs the contents to the first display. In addition, in step 1040, the electronic device outputs an object(s) associated with the contents to a display (e.g., a second display) that differs from the first display.

In addition to the method described with reference to FIG. 10, the electronic device may sense whether an arrangement or relative positions of displays is/are changed. The processor may again select a display for outputting contents based on the sensed change in the arrangement or the relative positions. In various embodiments of the present invention, in the event that it is unnecessary to output contents or an object(s) to at least one display due to a change in the arrangement or the relative positions (e.g., an electronic device is folded or a display does not appear within a user's view), the electronic device interrupts an output to the at least one display, thereby making it possible for the electronic device to manage power efficiently. In various embodiments of the present invention, if data is output to two or more displays of a plurality of displays other than a display of which the output is interrupted, the electronic device may again determine the first display for outputting contents (or, the second display for outputting an object) based on relative positions of displays or information on the display of which the output is interrupted.

FIGs. 11A to 11D are diagrams showing contents and objects output using a camera module, according to an embodiment of the present invention.

Referring to FIG. 11A, an electronic device may comprise a display 1110A and a display 1120A. For example, the display 1110A may be set to a display (e.g. a first display) for outputting contents, and the display 1120A may be set to a display (e.g. a second display) for outputting an object(s). In various embodiments of the present invention, the first display or the second display may include one or more displays. Below, the term "first display" or "second display" may be used for ease of description, but may also be used to indicate one display or two or more displays.

In various embodiments of the present invention, a subject that a camera module takes a picture of may be output to the first display as contents. In various embodiments of the present invention, the electronic device may determine the first display based on relative positions of the camera module and the displays 1110A and 1120A. For example, if the camera module is placed at a location corresponding to the display 1120A unlike FIG. 11A, contents may be output to the display 1120A.

In various embodiments of the present invention, at least one object that is associated with an image captured by the camera module may be output to the second display (e.g., the display 1120A). For example, a control menu 1121A including acquiring an image, switching to acquiring video, and mode change may be output to the second display. In addition, a menu 1123A for changing an acquiring environment and any other control menu 1127A may be output to the second display. Furthermore, if a camera application is running, information 1125A associated with acquiring, for example, a gallery previewing previously captured pictures in the form of a thumbnail may be output to the second display based on the application. The gallery may provide the most recently captured picture or a picture 1129A to be captured and stored at capture, together with previously captured pictures. As such information is provided to a display different from a display for outputting contents, a user may perform a task associated with a subject, with a portion of the subject not covered by a control menu.

Referring to FIG. 11B, an electronic device may include a display 1110B and a display 1120B. For example, the display 1110B may be set to a first display, and the display 1120B may be set to a second display. A moving picture taken by a camera module may be output to the first display as contents.

In various embodiments of the present invention, the electronic device may include a control menu 1121B to output various menus 1123B, a thumbnail 1125B of a recently captured movie clip, various acquiring menus 1127B, and a thumbnail 1129B of a moving picture being currently captured, to the second display.

In various embodiments of the present invention, when a moving picture is reproduced on the first display, objects such as a control menu may be output to the second display. In an embodiment of the present invention, when a user input (e.g., a touch or a hovering) is provided to the first display where the moving picture is reproduced, a control operation according thereto may be performed. For example, when the user provides an upward or downward touch input on the first display, a volume of the moving picture being currently reproduced may be increased or decreased. In this case, a volume control button may be displayed and may disappear when the user input ends.

Referring to FIG. 11C, an electronic device may comprise a display 1110C and a display 1120C. For example, the display 1110C may be set to a first display, and the display 1120C may be set to a second display. A subject taken by a camera module may be output to the first display 1110C. A general control menu 1121C and a selection menu 1123C may be output to the second display 1120C, and a menu 1125C for changing an acquiring mode may be provided in the form of a menu button.

Referring to FIG. 11D, an electronic device may include a display 1110D and a display 1120D. For example, the display 1110D may be set to a first display, and the display 1120D may be set to a second display. A subject taken by a camera module may be output to the first display 1110D. A general control menu 1121D and a selection menu 1123D may be output to the second display 1120D. A user may change an acquiring mode by controlling the selection menu 1123D using an input means 1125D such as a hand or a stylus pen. The control menu 1121D and the selection menu 1123D expressed on the display 1120D may be displayed together with an effect similar to that obtained by adjusting a camera lens.

In FIGs. 11A to 11D, a user of the electronic device may handle menus on a display differently from a display for outputting contents captured by the camera module or may refer to additional information on such a display, thereby improving efficiency in operation.

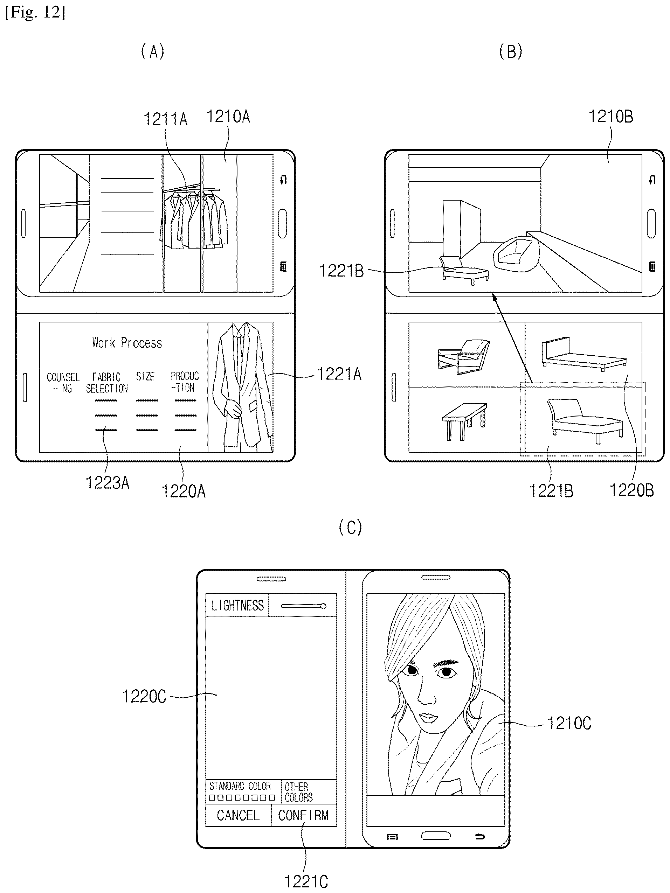

FIGs. 12A to 12C are diagrams showing interaction between contents and objects, according to an embodiment of the present invention.

Referring to FIG. 12A, an electronic device may comprise a display 1210A and a display 1220A. For example, the display 1210A may be set to a first display, and the display 1220A may be set to a second display. Images of goods from a store provided on the Internet may be output to the first display 1210A. In various embodiments of the present invention, contents output to the first display 1210A may be a store's homepage. In various embodiments of the present invention, contents output to the first display 1210A may be a captured image of a store where there are displayed various items for sale such as in a shopping mall, a department store, a wine shop, and a home appliance store. In various embodiments of the present invention, contents output to the first display 1210A may be a moving picture that is being taken using a camera module.

In various embodiments of the present invention, contents output to the first display may be various types of images (e.g., a broadcasting screen, a movie, and a captured moving picture) being reproduced.

The electronic device may output contents to the display 1210A (e.g. a first display) or detailed information on some of various items included in the contents to the second display 1220A. For example, when a user provides a touch or hovering input with respect to any item such as an item 1211A (e.g., a suit) output to the first display, a focus of a camera lens is placed during a designated time, or a relevant item is automatically recognized by the electronic device or a function of an application, the electronic device may output an additional image 1221A, such as an enlarged picture of the item and pictures seen at various angles, or additional information 1223A associated with the item. Objects such as the additional image 1221A or the additional information 1223A may be received as a response to a request provided to an external server or device through a communication module of the electronic device and then may be output to the second display.

Referring to FIG. 12B, an electronic device may include a display 1210B and a display 1220B. For example, the display 1210B may be set to a first display, and the display 1220B may be set to a second display. A background for disposing pieces of furniture may be output to the first display 1210B, and objects applicable to the background may be output to the second display 1220B.

In various embodiments of the present invention, if a user selects (e.g., touches) one of a plurality of objects output to the second display, an image 1221B corresponding to a relevant object may be output at any position of the first display. If the user shifts (e.g., drags) the relevant object in the second display, the image 1221A corresponding to the object may move on the first display according to the movement. If the user ends (e.g., releases) an input at an appropriate position, the image 1221A may be included in the background at a point that is placed last. In various embodiments of the present invention, in addition to the objects, menu objects for storing, canceling, deleting, and redoing the edited contents may be output to the second display. A method described with reference to FIG. 12B may be applied to an application for composing, editing and simulating images as well as the above-described example.

Referring to FIG. 12C, an electronic device may comprise a display 1210C and a display 1220C. For example, the display 1210C may be set to a first display, and the display 1220C may be set to a second display. A screen for acquiring an image (e.g., an image captured by a front camera of the electronic device) may be output to the first display 1210C, and a screen for controlling lighting or hue for balance adjustment may be output to the first display 1220C. In addition, in various embodiments of the present invention, a display (e.g., a first display) for outputting contents may be changed according to a position of a front camera module. For example, in the event that the front camera module is disposed at a position corresponding to the second display 1220C or in the event that a user decides to use one front camera module, disposed at a position corresponding to the second display 1220C, from among a plurality of front camera modules, the first display may be the display 1220C, and the second display may be the display 1210C.

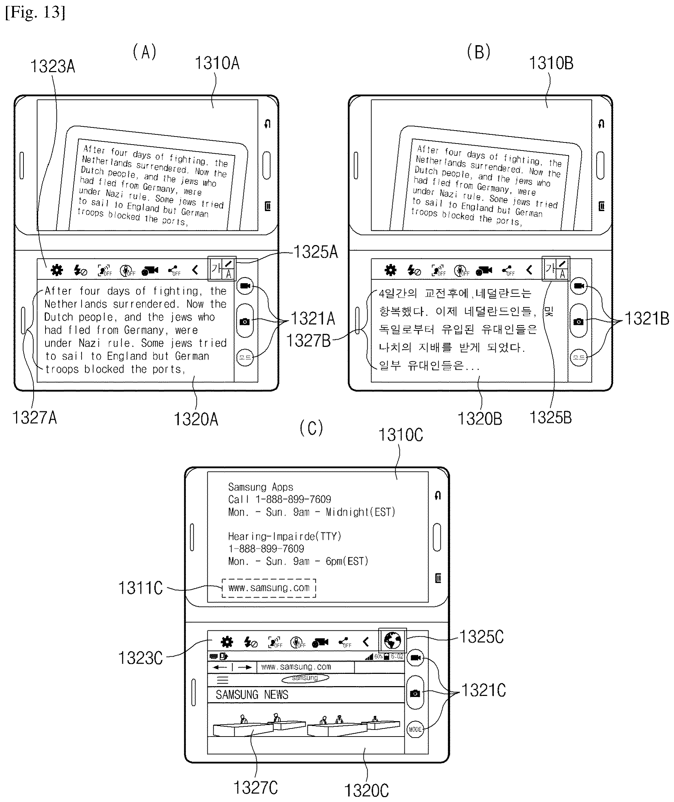

FIGs.13A to 13C are diagrams showing contents and objects output using an Optical Character Recognition (OCR) application, according to an embodiment of the present invention.

Referring to FIG. 13A, an electronic device may include a display 1310A and a display 1320A. For example, the display 1310A may be set to a first display, and the display 1320A may be set to a second display. An image including a text shape may be output to the first display 1310A. For example, a PDF document or image files of Tagged Image File Format (TIFF) and Joint Photographic Experts Group (JPEG) formats may be output. In various embodiments of the present invention, an image including a text shape may be captured by a camera module and then may be output to the first display 1310A.

A result 1327A obtained by applying an OCR function to contents output to the first display may be output to the second display. For example, at least one object to be output to the second display may include a text extracted from an image output to the first display. The extracted text may correspond to a text shape included in the image.

The electronic device may further output a control menu 1323A for controlling other objects, for example, a camera function or an OCR function, to the second display. Also, in various embodiments of the present invention, the electronic device may include a translation button 1325A for translating the OCR-based object 1327A to a designated language. When the translation button 1325A is selected by the user, the electronic device translates the text that the object 1327A includes. For example, the electronic device may automatically perform translation. Alternatively, the electronic device may provide information on the text to an external device or server and may receive and output a result translated by the external device or server.

In various embodiments of the present invention, the electronic device may determine whether a language of an object (e.g., 1320A) output by the OCR function is equal to a designated language (e.g., a default language of the electronic device or a language of a nation where the electronic device is released). If a language of the extracted text differs from the designated language, then the electronic device may translate the extracted text to the designated language automatically or by a user input.

In various embodiments of the present invention, at least one object output to the second display 1320A may be a result of translating a text extracted from an image output to the first display 1310A. For example, as illustrated in FIG. 13B, a result to which the OCR function and the translation function are applied may be output to the display 1320B.

Referring to FIG. 13C, an image including a text shape may be output to a first display (e.g., a display 1310C). The text shape may include a shape corresponding to a hyperlink 1311C (e.g., www.samsung.com).

In various embodiments of the present invention, an object output to a second display may provide a menu (e.g., a link) 1325C on the hyperlink 1311C. When the hyperlink 1311C is selected, a web page 1327C corresponding to the hyperlink 1311C may be output (e.g., loaded) at a predetermined area of the second display. Thus, a user may maintain a view on an original document and may obtain additional information by checking an associated link through any other display.

In various embodiments of the present invention, as contents output to the first display are changed in real time, an object output to the second display may also be changed. For example, if contents (e.g., an original text) output to the display 1310C is changed due to a movement of the electronic device (e.g., a camera module or a subject), contents (e.g., a translated text) output to the display 1320C may also be changed in real time.

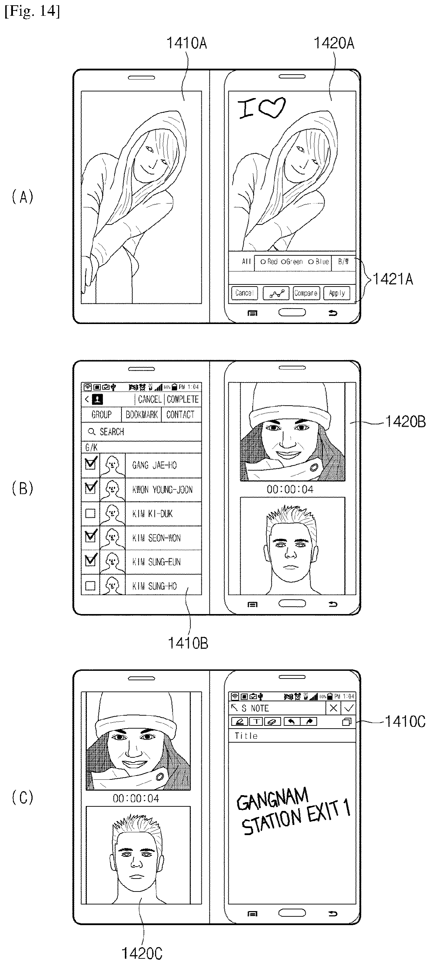

FIG. 14 is a diagram showing contents and object screens according to another embodiment of the present invention.

Referring to FIG. 14A, an electronic device may include a display 1410A and a display 1420A. For example, the display 1410A may be set to a first display, and the display 1420A may be set to a second display. An original image file may be output to the first display as contents. An edit menu 1421A for editing the original image file and an image edited using the edit menu may be output to the second display. In various embodiments of the present invention, in the event that a running application is an image editing application, the electronic device may determine whether to use any display as the first display, based on user information (e.g. whether the user is left-handed). For example, when the user is right-handed, the electronic device may determine a left display (e.g., 1410A) as the first display such that a control menu is placed at a right display. In this case, objects including a control menu may be expressed on the second display, that is, the right display (e.g., 1420A).

Referring to FIG. 14B, an electronic device may include a display 1410B and a display 1420B. For example, the display 1410B may be set to a first display, and the display 1420B may be set to a second display. In various embodiments of the present invention, a screen (e.g. contents) for video calling with another user may be output to the first display. In various embodiments of the present invention, contact data of the electronic device or a contact application (e.g. an object) may be output to the second display.

Referring to FIG. 14C, an electronic device may include a display 1410C and a display 1420C. For example, the display 1410C may be set to a first display, and the display 1420C may be set to a second display. In various embodiments of the present invention, video calling with another user may be output to the first display. Contents may include his/her video, one's own video (e.g. captured by a front camera module), and a call time. When the video calling (or, a video calling application) is executed, the electronic device may set any other display (e.g., a display where the front camera module is not installed) to the second display automatically or according to a user input such that an object(s) associated with the video calling is displayed. In various embodiments of the present invention, the electronic device may provide the second display with a memo application to provide a function of making a note while talking over the telephone, a contact application to check or amend contact information of any other person while talking over the telephone, or an application to search for information associated with a call subject. The electronic device may provide the second display with a switchover menu, as an object, such as an application icon (App icon) for switching an application output to the second display to any other application (e.g., switching from a memo application to a contact application), together with applications. When an application is switched, the first and second displays may be switched (or again set). For example, in an example shown in FIG. 14B, if a user switches a contact application into a memo application, the first display and the second display may be again set as illustrated in FIG. 14C. In addition, in various embodiments of the present invention, the settings of the first and second displays may be changed to provide a memo application that provides a function of making a note while talking over the telephone. For example, if a user is right-handed or decides to display a memo note at the right of the electronic device, a memo application may be expressed on the display 1410C, and the video calling may be output to the display 1420C, as illustrated in FIG. 14C.

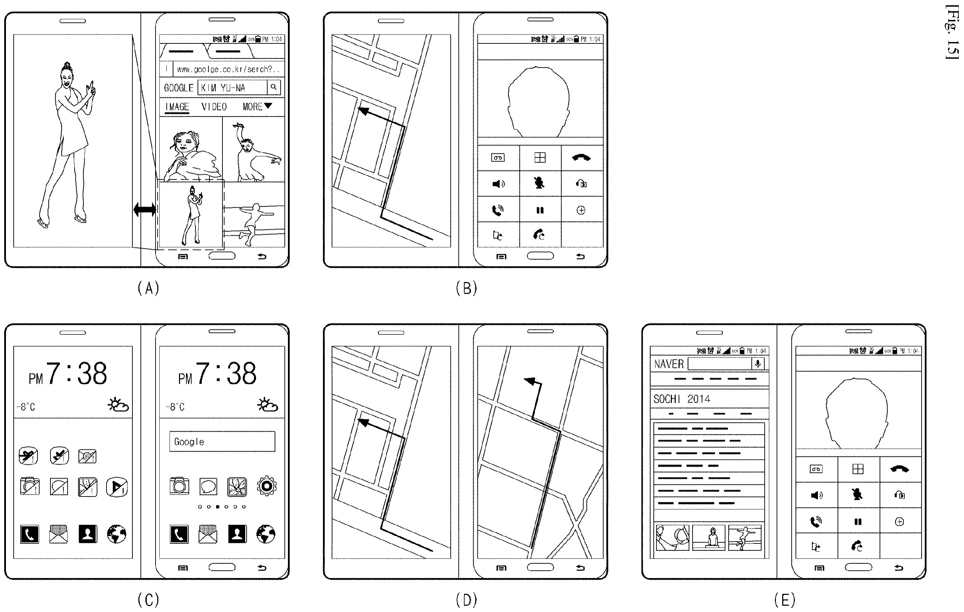

FIGs. 15A to 15E are diagrams of contents and object screens according to an embodiment of the present invention.

In FIGs.15A to 15E, a right display may be understood as a first display, and a left display may be understood as a second display.

Referring to FIG. 15A, when provided with a user input (e.g., a selection) on any image among a result of searching for an image output to the first display, an electronic device may enlarge a picture (or, make a picture of an original resolution) of a relevant image output to the second display. Thus, when a found result (or, a link on a found result) is selected, conventionally, a new window may be opened, or a screen may be switched/shifted to a relevant web page. In contrast, according to an embodiment of the present invention, a user may maintain a screen of the found result and may check more detailed information using the second display.

Referring to FIG. 15B, the electronic device may output contents associated with a telephone conversation to the first display. In this case, when expressions (e.g., where, at, avenue, street, building, station, etc.) including or indicating a site of the content of the telephone conversation are detected, a map of a navigation associated with a relevant site may be output to the second display. In various embodiments of the present invention, information on a moving route, a moving time, etc. between a current position and the detected position of the user of the electronic device may be output together.

In various embodiments of the present invention, in the event that the user of the electronic device will meet the other party making a call with the user, route guidance on a current position, an intermediate location, etc. may be provided based on a position of the user and a position of the other party, when a call is connected. In this case, the electronic device may issue a message for requesting position information of the other party to a terminal of the other party and may find the position of the other party from a response to the request.

Referring to FIG. 15C, the electronic device may output a general (e.g. unsecured) screen to the first display and a secured screen to the second display. For example, a general Android home screen may be output to the first display, and a screen (e.g., Samsung KNOX) to which a security solution is applied may be output to the second display.

Referring to FIG. 15D, the electronic device may output a navigation or map screen to the first display and an enlarged screen on any zone (e.g., nearby a current position of the electronic device) to the second display, or vice versa. Also, when an input, such as pinch-to-zoom, on a point of a route output to the first display is provided, zoom in/ out according to a relevant input may be made on the second display without zoom in/ out on the first display.

Referring to FIG. 15E, the electronic device may output contents associated with a telephone conversation to the first display. In this case, a search on a certain expression that is mentioned while talking over the telephone may be made on the second display. For example, when the certain expression is iterated or a trigger instruction (e.g., wait, search "the resolution of Galaxy Note") for an Internet search is detected, the electronic device may carry out a search according to a relevant expression or instruction and may output a searching result to the second display, thereby making it possible to provide the user with pieces of data associated with a call in real time while talking over the telephone with the other party.

The term "module" used in the present invention, for example, may indicate a unit including one of hardware, software, and firmware or a combination of two or more thereof. The term "module," for example, may be interchangeably used with terms such as "unit," "logic," "logical block," "component," "circuit," etc. The term "module" may indicate a minimum unit of a component integrally configured or a portion thereof. The term "module" may indicate a minimum unit performing one or more functions or a portion thereof. The term "module" may indicate a unit implemented mechanically or electronically. For example, the term "module" according to the present invention may indicate a unit that includes at least one of an Application-Specific Integrated Circuit (ASIC) performing certain operations, a Field-Programmable Gate Array (FPGA), or a programmable-logic device, known or developed in the future.

According to an embodiment of the present invention, at least a portion of an apparatus (e.g., modules or functions thereof) or a method (e.g., steps) according to the present invention, for example, may be implemented by instructions stored in a non-transitory computer-readable storage medium in the form of a programmable module. An instruction, when executed by one or more processors (e.g., a processor 620), may perform a function corresponding to the instruction. The non-transitory computer-readable storage medium, for example, may be a memory 630. At least a portion of the programming module, for example, may be implemented (e.g., executed) by the processor 620. At least a portion of the programming module may include a module, a program, a routine, a set of instructions, or a process for performing one or more functions.

A non-transitory computer-readable recording medium may include a hard disk, magnetic media such as a floppy disk and a magnetic tape, optical media such as Compact Disc Read Only Memory (CD-ROM) and a Digital Versatile Disc (DVD), a magneto-optical medium such as a floptical disk, and hardware devices configured to store and perform a program instruction (e.g., a programming module), including a Read Only Memory (ROM), a Random Access Memory (RAM), and a flash memory. Also, a program instruction may include not only a mechanical code such as code generated by a compiler but also a high-level language code executable on a computer using an interpreter. The above hardware unit may be configured to operate via one or more software modules for performing an operation of the present invention, and vice versa.

A module or a programming module according to an embodiment of the present invention may include at least one of the above elements, or a portion of the above elements may be omitted, or additional other elements may be further included. Operations performed by a module, a programming module, or other elements according to an embodiment of the present invention may be executed sequentially, in parallel, repeatedly, or in a heuristic method. Also, a portion of operations may be executed in different sequences, omitted, or other operations may be added.

According to an embodiment of the present invention, in a non-transitory storage medium storing instructions, the instructions, when executed by at least one processor, are set to allow the at least one processor to perform at least one operation, and the at least one operation, in a method for operating an electronic device, may include determining a first screen, including at least a display, from among a plurality of displays included in the electronic device; outputting contents to the first screen thus determined; and outputting at least one object associated with the contents to a second screen different from the first screen.

According to embodiments of the present invention, the use environment of an electronic device may be efficiently constructed by outputting contents and an object such as a control menu, which were output to a conventional display, to different displays independently.

Also, according to embodiments of the present invention, when a display is placed not to output contents or an object(s), the electronic device may interrupt an output to a relevant display, thereby improving efficiency in managing power.

Also, according to embodiments of the present invention, data to be output to a display may be adjusted based on the use environment of the electronic device, thereby increasing user convenience of the electronic device.

Also, according to embodiments of the present invention, it is possible to improve user experience on various applications such as a camera application, an image application, a call application, and an Optical Character Recognition (OCR) application.

While the present invention has been shown and described with reference to various embodiments thereof, it will be understood by those skilled in the art that various changes in form and details may be made therein without departing from the scope and spirit of the present invention as defined by the appended claims and their equivalents.

Further examples in accordance with the present disclosure are set out in the following numbered clauses.
1. An electronic device, comprising:
   a plurality of displays;
   at least one processor configured to select a first display including at least one of the plurality of displays, based on relative positions of the plurality of displays, user information, an application to be executed, or a component associated with a function of the application; and
   a display control module configured to output contents to the first display and at least one object associated with the contents to at least one other second display of the plurality of displays.
2. The electronic device of clause 1, wherein the display control module comprises processors corresponding respectively to the plurality of displays.
3. The electronic device of clause 1, wherein the at least one processor is configured to select at least one display corresponding to a designated position of the relative positions of the plurality of displays as the first display.
4. The electronic device of clause 1, wherein the at least one processor is configured to select the first display based on at least one of an input of a user on the electronic device, a user's habit of using the electronic device, a grip state, or whether the user is left-handed or right-handed.
5. The electronic device of clause 1, wherein the at least one object comprises at least one menu for controlling or editing the contents.
6. The electronic device of clause 1, wherein the at least one object comprises an application for editing the contents.
7. The electronic device of clause 1, wherein the display control module is further configured to output additional information associated with the contents as the at least one object.
8. The electronic device of clause 1, wherein the display control module is further configured to output additional information on a selected item of a plurality of items included in the contents as the at least one object.
9. The electronic device of clause 1, further comprising:
   a communication module configured to receive the at least one object from an external device.
10. The electronic device of clause 1, further comprising:
   a camera module, and
   wherein the at least one processor is further configured to select one or more displays including the camera module from among the plurality of displays as the first display.
11. The electronic device of clause 10, wherein the contents comprise an image obtained by the camera module, and wherein the at least one object comprises a control menu or addition information associated with the image.
12. The electronic device of clause 1, wherein a portion of a function of at least one of the first display or the second display is deactivated based on relative positions of the first display and the second display.
13. A method of an electronic device which includes a first display and a second display, the method comprising:
   selecting one of the first display or the second display, based on relative positions of the first display and the second display, user information, an application to be executed, or a component associated with a function of the application; and
   outputting contents to the selected first display or second display and at least one object associated with the contents to an unselected display.
14. The operating method of clause 13, further comprising:
   sensing a change in the relative positions;
   deactivating at least a portion of a function of at least one of the first display or the second display, based on at least the changed relative positions.
15. The operating method of clause 14, further comprising:
   outputting information on at least a portion of contents or an object being output to the at least one of the first display or the second display, through a display different from a display to which the information is being output.

## Claims

1. An electronic device, comprising:
a first body comprising a first display, a camera, a speaker, and a processor;
a second body comprising a second display; and
a connector connecting the first body and the second body;
wherein the second body further includes an opening corresponding to the speaker in folded state, and
wherein the processor is configured to control the first display and the second display.

2. The electronic device of claim 1, wherein the first body further comprises a first display control module for the first display and the second body further comprises a second display control module for the second display, and
wherein the processor is further configured to control the first display using the first display control module and control the second display using the second display control module.

3. The electronic device of claim 1, wherein the processor is further configured to select, among the first display and the second display, one display to output contents based on relative positions between the first display and the second display.

4. The electronic device of claim 1, wherein the processor is further configured to select the first display to output contents based on at least one of an input of a user on the electronic device, a user's habit of using the electronic device, a grip state, or whether the user is left-handed or right-handed.

5. The electronic device of claim 3, wherein the processor is further configured to output at least one object on other display other the one display, the at least one object comprising at least one menu for controlling or editing the contents.

6. The electronic device of claim 5, wherein the at least one object comprises an icon for an application for editing the contents.

7. The electronic device of claim 5, wherein the processor is further configured to output additional information associated with the contents as the at least one object.

8. The electronic device of claim 3, wherein the processor is further configured to output additional information on a selected item of a plurality of items included in the contents as the at least one object.

9. The electronic device of claim 8, wherein the processor is further configured to identify the selected item based on at least one of a touch input, a hovering input, focusing, auto recognition, or situation information.

10. The electronic device of claim 5, further comprising:
a communication circuitry configured to receive the at least one object from an external device.

11. The electronic device of claim 1, wherein the processor is further configured to select, among the first display and the second display, one display to output contents based on relative positions between the first display and the camera.

12. The electronic device of claim 11,
wherein the processor is further configured to select, among the first display and the second display, one display to output contents based on relative positions between the first display and the second display,
wherein the contents comprise an image obtained by the camera, and
wherein the at least one object comprises a control menu or additional information associated with the image.

13. The electronic device of claim 5, wherein the contents comprise an image, and
wherein the at least one object comprises a text extracted from the image.

14. The electronic device of claim 13, wherein the at least one object comprises a text translated into a designated language if a language of the extracted text is not the designated language.

15. The electronic device of claim 13, wherein the at least one object comprises a menu on a hyperlink if the extracted text includes the hyperlink.
